# EUROPEAN PATENT SPECIFICATION

(11) **EP 3 890 989 B1**
(45) Date of publication and mention of the grant of the patent: **20.09.2023**
(21) Application number: 19813044.5
(22) Date of filing: 06.12.2019
(51) Int. Cl.: B41M 5/00, B41M 1/30, B41M 7/00, C09D 11/00, C09D 11/101, C09D 11/30

(54) **INKJET PRINTING ON POLYCARBONATE SUBSTRATES**
TINTENSTRAHLDRUCK AUF POLYCARBONATSUBSTRATEN
IMPRESSION À JET D'ENCRE SUR DES SUBSTRATS DE POLYCARBONATE

(30) Priority: 07.12.2018 EP 18211027
(43) Date of publication of application: 13.10.2021
(73) Proprietor: Nanogate SE, 66287 Goettelborn (DE)
(72) Inventor: VAN PEER, Cornelis Johannes Gerardus Maria, 4661 ZD Halsteren (NL); VOSSEN, Mathias Antoinette Johannes, 5941 EX Velden (NL)
(74) Representative: Nederlandsch Octrooibureau
(86) International application number: PCT/EP2019/084005
(87) International publication number: WO 2020/115285

(56) References cited:
- EP-A1- 1 864 823
- GB-A- 1 080 233
- US-A1- 2018 229 525

## Description

### TECHNICAL FIELD OF THE INVENTION

The invention relates to a method for printing radiation-curable ink, such as UV-curable ink, onto a polycarbonate substrate. The invention further relates to inkjet printed polycarbonate substrates obtainable by said method.

### BACKGROUND OF THE INVENTION

Plastic materials are being used in a number of automotive engineering applications to enhance vehicle styling. Due to its superior mechanical and thermal properties, polycarbonate is one of the preferred materials in the manufacturing of numerous parts and components in the automotive industry. Nowadays, there is an increasing demand for decorated, such as personalized, polycarbonate parts and components, and also for polycarbonate parts and components provided with electronic components.

However, non-porous low surface energy plastic substrates such as polycarbonate substrates present certain problems with respect to quality and robustness of images printed thereon. Inkjet printed images on the plastic substrate can for example be easily rubbed off or scratched off during normal handling with only moderate force. Generally speaking, this low robustness is caused by a limited adhesion of the ink to the plastic substrate.

Non-porous plastic substrates offer only a limited number of sites at the molecular level, or hardly any sites at all, for firm and lasting grip and tight bonding of the molecules in the ink to the substrate. Therefore, current printing technologies such as inkjet printing of radiation-curable ink do not provide for high-quality wear-resistant results in many if not all occasions when plastic substrates such as untreated or virgin polycarbonate substrates are printed on.

In order to mitigate this problem, it has been proposed to subject plastic substrates to surface treatments such for example flame oxidation, corona treatment, UV H-bulb treatment or plasma treatment before printing. Moreover, coatings and primers have been developed for priming the surfaces of non-porous plastic substrates before ink is printed thereon.

For example, US patent application US2014/0227494A1 discloses printing an adhesive primer onto non-porous plastic substrates, among which are polypropylene, polyethylene terephthalate and polycarbonate, using inkjet technology to form a primer layer, and subsequently printing a UV-curable ink onto the primer layer using inkjet technology. Likewise, US2003/0224128A1 discloses primed substrates, among which are polycarbonate films, that are inkjet printed on with a non-aqueous solvent based ink. Furthermore, international patent application WO02/85638A1 discloses priming substrates, among which are polycarbonate films, that are inkjet printed on with radiation curable inks, such as UV-curable ink.

However, surface treatments of polycarbonate surfaces, such as for example flame oxidation, UV treatment using H-bulb, corona treatment or plasma treatment before printing do not provide sufficient print quality, particularly not in terms of adhesion, scratch resistance and smoothness of the printed layer.

Current priming or coating techniques of polycarbonate surfaces usually also do not provide sufficient print quality, particularly not in terms of adhesion, scratch resistance and smoothness of the printed layer. Moreover, intermediate primer or coating layers between polycarbonate substrate and ink layer are not always wanted. Typically, the bond between the primer and the ink layer and the primer and the substrate is only intended to provide short term adhesion performance. For extreme adhesion strength, the ink layer must be able to form a chemical bond with the substrate that is printed on. Furthermore an additional layer of primer between the substrate and the ink layer is another layer receptive towards delamination in extreme adhesion tests, such as water immersion tests or thermal shock tests.

Up till now, to the best of the knowledge of the inventors of the current invention, no inkjet method and means are currently available for providing polycarbonate surfaces with radiation-curable ink images meeting the quality standards as required in for example applications as automotive interior, glazing of cars, buildings, lighting, lenses, particularly with regard to wear-resistance, strength of adhesion of the ink, and prevention of the occurrence of cracks in the ink layer.

Therefore, for applications such as decorating polycarbonate substrates for use in automotive interior applications, in glazing such as glazing of cars, buildings, construction of lenses, and in lighting applications, screen printing is nowadays still the preferred technology.

US2016/0193826A1 discloses a method for forming articles having a decorative surface, for example for use in the automotive industry, comprising screen printing an ink composition comprising a solvent-based heat-curable composition onto at least one major surface of a thermoformable sheet, curing said curable composition to obtain a printed sheet and thermoforming the printed sheet to obtain a decorated article. Example A of US2016/0193826A1 discloses screen printing of heat-curable inks comprising a solvent mixture with an undefined amount of cyclohexanone on a sheet of clear Makrofol^{™} polycarbonate, followed by drying and thermoforming. It is described in US2016/0193826A1 that it is believed that the use of cyclohexanone as a solvent in the ink and the use of the polycarbonate as thermoformable polymeric sheet has the advantage to greatly improve the penetration into the thermoformable polymeric sheet of the ink material containing the ink composition and the solvent in which the ink composition is soluble.

One of ordinary skill in the art appreciates the differences between various print methods and recognizes that a combination of ink and receiving substrate that results in high image quality in one printing method often exhibits an entirely different image quality with another print method. For example, in contact printing methods such as screen printing, a blade forces the ink to advance and wet the receiving substrate. In the case of non-contact printing methods such as inkjet printing, the individual ink drops are merely deposited on the surface. In order to achieve good image quality, the ink drops need to spread, join together, and form a substantially uniform, levelled film. This process requires a low advancing contact angle between the ink and the substrate. For any given ink/substrate combination, the advancing contact angle is typically significantly greater than the receding contact angle. Accordingly, ink/substrate combinations that result in good image quality when printed with contact methods such as screen printing, often exhibit insufficient wetting when imaged with non-contact printing methods such as inkjet printing. Insufficient wetting results in low radial diffusion of the individual ink drops on the surface of the substrate, low colour density, and banding effects (e.g. gaps between rows of drops). Another important difference between screen printing and inkjet printing is the physical properties of the ink. Screen printing ink compositions typically contain over 40 wt% solids and have a viscosity of at least two orders of magnitude greater than the viscosity of inkjet printing inks. It is not generally feasible to dilute a screen printing ink to make it suitable for inkjet printing. Furthermore, the polymers employed in screen printing inks are typically high in molecular weight and exhibit significant elasticity. In contrast, inkjet ink compositions are typically Newtonian.

Screen printing, however, has various downsides, hampering fast and efficient production time with economically acceptable measures. That is to say, for screen printing, switching screens in between printing steps is time consuming, and an idle time is required in between subsequent screen printing steps. Moreover, the technology is relatively expensive from an economic perspective when small numbers of prints are required.

Consequently, there is still a need for an economically feasible process for printing of ink on polycarbonate substrates of good print quality, in particular with regard to adhesion between ink and polycarbonate substrate, scratch resistance and smoothness of the printed layer.

US2018/0229525A1 discloses a printing method to print a label on a surface of a resin base, the printing method comprising (a) a dissolving process of dissolving a surface of the resin base using an organic solvent, (b) a printing process of printing a label layer using an UV-curable ink to form the label on the surface of the resin base that has been dissolved, and (c) an ink-curing process of irradiating the printed label layer by an ultraviolet light.

It is therefore a first objective of the invention to provide simplified methods for printing of ink, such as conductive ink tracks, on polycarbonate substrates resulting in good print quality, in particular with regard to adhesion between ink and polycarbonate substrate, scratch resistance and smoothness of the printed layer.

It is a second object of the invention to provide methods for printing of ink, such as conductive ink tracks, on polycarbonate substrates resulting in good or improved print quality, in particular with regard to adhesion between ink and polycarbonate substrate, scratch resistance and smoothness of the printed layer, wherein said methods are economically feasible when small numbers of prints are required.

It is a third objective of the invention to provide simplified methods for printing of ink, such as conductive ink tracks, on polycarbonate substrates resulting in good or improved print quality after thermoforming, in particular with regard to adhesion between ink and polycarbonate substrate and formation of cracks.

It is a fourth object of the invention to provide methods for printing of ink, such as conductive ink tracks, on polycarbonate substrates resulting in good or improved print quality after thermoforming, in particular with regard to adhesion between ink and polycarbonate substrate and formation of cracks, wherein said methods are economically feasible when small numbers of prints are required.

It is a fifth object of the invention to provide improved methods for the manufacture of printed electronics or functionalized or decorated glazing parts, such as safety glazing and/or vehicle glazing, based on inkjet printing on polycarbonate substrates.

### SUMMARY OF THE INVENTION

The inventors have established that at least one of the above objectives is achieved by first treating a polycarbonate sheet or film with a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of a diluent chosen from the group consisting of diacetone alcohol, *n*-hexane, *n*-heptane and *n*-octane, and by subsequently inkjet printing and curing a radiation-curable ink, such as a radiation-curable ink comprising metal nanoparticles, on the treated polycarbonate substrate having a limited but non-zero weight percentage of the one or more cyclic ketones being liquid at a temperature between 15 and 35°C.

It was found that treating a polycarbonate substrate with the treating fluid swells the polycarbonate in the treated areas such that the polycarbonate surface *'opens up'* and allows the radiation-curable ink and the swollen polycarbonate surface to form an interlocking layer with improved wetting and adhesion properties. It was further found that the treated polycarbonate surface returned to the *"closed* non-swollen state when all of said treating fluid was removed from the treated polycarbonate substrate. On the other hand it was established that leaving more than 1 wt% of the treating fluid, based on the weight of the treating fluid, on and/or in the treated polycarbonate substrate resulted in inferior print quality. Good print quality, in terms of adhesion and surface smoothness, was obtained when the amount of the treating fluid was between 1 ppm and 1 wt%, based on the weight of the treated polycarbonate substrate just before printing.

It was further established that subsequent thermoforming of the polycarbonate substrate with the cured ink thereon followed by applying a further coating layer, such as a hardcoat, resulted in products that meet the current most relevant requirements for safety glazing or vehicle glazing as regards chemical attack, mechanical strength and transparency.

Unlike for example screen printing, the method of the invention allows for the efficient and cost-effective production of unique or personalized products in a single run, such as for example vehicle glazing with a black obscuration band and a unique production number and production date, or a unique chassis number, inkjet printed thereon. Moreover, the method of the invention allows for the production of for example vehicle glazing wherein both a black obscuration band and conductive tracks are inkjet printed in a single run using different inks and print heads.

Accordingly, in a first aspect of the invention a method for printing radiation-curable ink onto a polycarbonate substrate is provided, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of a diluent chosen from the group consisting of diacetone alcohol, n-hexane, n-heptane and n-octane;
c) treating at least part of at least the first surface of the polycarbonate substrate of step (a) with between 0.06 and 5 g/m², based on the treated area, of the treating fluid of step (b) for a period of at least 5 seconds, preferably at a temperature between 15 and 35°C, resulting in a treated polycarbonate substrate layer with swollen areas where the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with the diluent to remove an excess of the one or more cyclic ketones being liquid at a temperature between 15 and 35°C;
e) optionally drying the treated polycarbonate substrate layer obtained in step (c) or (d) to reduce the weight percentage of the combined amounts of the treating fluid on and in the treated polycarbonate substrate to between 1 ppm and 0.4 wt%, based on the weight of the treated polycarbonate substrate;
f) providing the treated polycarbonate substrate obtained in any one of steps (c) to (e) wherein the combined amounts of the treating fluid on and in the treated polycarbonate substrate is between 1 ppm and 0.4 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the at least first surface of the polycarbonate substrate;
i) optionally thermoforming the polycarbonate substrate with the cured ink thereon obtained in step (h); and
j) optionally applying a coating layer onto at least part of at least the first surface of the polycarbonate substrate with the cured ink thereon obtained in step (h) or onto the thermoformed polycarbonate substrate with the cured ink thereon obtained in step (i), followed by drying or curing the coating layer.

In an embodiment, the radiation-curable ink of step (g) comprises metal nanoparticles dispersed therein, molecularly dissolved metal-precursors or dispersed metal-precursor nanoparticles to provide conductive tracks on the treated polycarbonate substrate.

In a second aspect, the invention relates to inkjet printed polycarbonate substrates, such as inkjet printed electronics, obtained by or obtainable by the method as defined hereinbefore.

In a very preferred embodiment, the inkjet printed polycarbonate substrates obtained by or obtainable by the process are chosen from the group consisting of decorated and/or heatable windows and windscreens, for example for the automotive industry, in-mould electronics, printed antennas, printed RFID-tags, printed capacitive switches, printed capacitive light guides, and printed chip ID cards.

### DEFINITIONS

The term *"primer"* has its regular scientific meaning throughout the text, and here refers to a coating put on the surface of a polycarbonate substrate before overlaying the polycarbonate substrate with a further layer of radiation-curable ink. Priming a polycarbonate substrate with a primer is intended to improve adhesion of the further layer of radiation-curable ink to the surface of the substrate material. A *"primer"* as used herein forms a physical intermediate layer of primer material between the polycarbonate substrate and the further layer of radiation-curable ink. In other words, the layer of radiation-curable ink is applied onto the primer and not onto the polycarbonate substrate.

The term *"polycarbonate"* has its regular scientific meaning throughout the text, and here refers to a thermoset plastic material and a thermo(softening) plastic material, suitable for providing as a sheet or film of polymer material, and comprising (alternating) carbonate units in the polymer chain. The term *"polycarbonate"* as used herein also encompasses copolymers.

The term *"inkjet"* has its regular scientific meaning throughout the text, and here refers to the type of computer printing that transforms a digital image to a print by propelling droplets of ink onto the surface of a polycarbonate substrate.

The *"piezo inkjet"* has its regular scientific meaning throughout the text, and here refers to drop-on-demand technology using piezoelectric printheads for applying droplets of radiation-curable ink to a polycarbonate substrate.

The term *"swelling",* or *"swollen",* has its regular scientific meaning throughout the text, and here refers to at least a portion of a surface of a polycarbonate substrate that adopted an increased volume in a second state, arrived at by physically and/or chemically treating said portion of the surface in a first state.

### BRIEF DESCRIPTION OF THE DRAWINGS

Figure 1 is a microscopic photograph of the interface of a polycarbonate substrate pretreated with a treating fluid with a UV-curable ink printed thereon (magnification 20.000). 'A' refers to `cured UV-curable ink, 'B' to `intermediate layer' and 'C' to `polycarbonate layer'.
Figure 2 is a photograph showing the difference in visual appearance between silver conductive tracks printed, cured and sintered onto polycarbonate pretreated with a treating fluid (right-hand side of dotted line) and conductive tracks printed, cured and sintered onto polycarbonate that was not pretreated (left-hand side of dotted line) on a single sheet of polycarbonate.
Figure 3 is an example of a pattern comprising a black obscuration band with matrix dots, typical for vehicle glazing, to be printed onto a treated surface of a polycarbonate substrate, according to the process of the invention.
Figure 4 shows a microscopic close-up of a product obtained using the process of the invention including a thermoforming step and a further coating step. The printed pattern comprises a black obscuration band with matrix dots, typical for vehicle glazing.

### DETAILED DESCRIPTION OF THE INVENTION

In a first aspect, the invention relates to a method for printing radiation-curable ink onto a polycarbonate substrate, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of a diluent chosen from the group consisting of diacetone alcohol, *n*-hexane, *n*-heptane and *n*-octane;
c) treating at least part of at least the first surface of the polycarbonate substrate of step (a) with between 0.06 and 5 g/m², based on the treated area, of the treating fluid of step (b) for a period of at least 5 seconds, preferably at a temperature between 15 and 35°C, resulting in a treated polycarbonate substrate layer with swollen areas where the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with the diluent to remove an excess of the one or more cyclic ketones being liquid at a temperature between 15 and 35°C;
e) optionally drying the treated polycarbonate substrate layer obtained in step (c) or (d) to reduce the weight percentage of the combined amounts of the treating fluid on and in the treated polycarbonate substrate to between 1 ppm and 0.4 wt%, based on the weight of the treated polycarbonate substrate;
f) providing the treated polycarbonate substrate obtained in any one of steps (c) to (e) wherein the combined amounts of the treating fluid on and in the treated polycarbonate substrate is between 1 ppm and 0.4 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the at least first surface of the polycarbonate substrate;
i) optionally thermoforming the polycarbonate substrate with the cured ink thereon obtained in step (h); and
j) optionally applying a coating layer onto at least part of at least the first surface of the polycarbonate substrate with the cured ink thereon obtained in step (h) or onto the thermoformed polycarbonate substrate with the cured ink thereon obtained in step (i), followed by drying or curing the coating layer.

As will be understood by those skilled in the art, the method for printing radiation-curable ink onto the polycarbonate substrate can, depending on the subsequent steps that are performed on the polycarbonate substrate with cured ink thereon, also be a method for the production of products that have the polycarbonate substrate with cured ink thereon as an intermediate product, such as a method for the production of decorated and/or heatable windows and windscreens, for example for the automotive industry, in-mould electronics, printed antennas, printed RFID-tags, printed capacitive switches, printed capacitive light guides, and printed chip ID cards.

In an embodiment, the method for printing radiation-curable ink onto a polycarbonate substrate comprises the steps of:
a) providing a polycarbonate substrate in the form of a sheet or film having a thickness and having a first and a second surface;
b) providing a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of diluent diacetone alcohol;
c) treating at least part of at least the first surface of the polycarbonate substrate of step (a) with between 0.06 and 5 g/m², based on the treated area, of the treating fluid of step (b) for a period of at least 5 seconds, preferably at a temperature between 15 and 35°C, resulting in a treated polycarbonate substrate layer with swollen areas where the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with diluent diacetone alcohol to remove an excess of the one or more cyclic ketones being liquid at a temperature between 15 and 35°C;
e) optionally drying the treated polycarbonate substrate layer obtained in step (c) or (d) to reduce the weight percentage of the combined amounts of the treating fluid on and in the treated polycarbonate substrate to between 1 ppm and 0.4 wt%, based on the weight of the treated polycarbonate substrate;
f) providing the treated polycarbonate substrate obtained in any one of steps (c) to (e) wherein the combined amounts of the treating fluid on and in the treated polycarbonate substrate is between 1 ppm and 0.4 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the at least first surface of the polycarbonate substrate;
i) optionally thermoforming the polycarbonate substrate with the cured ink thereon obtained in step (h); and
j) optionally applying a coating layer onto at least part of at least the first surface of the polycarbonate substrate with the cured ink thereon obtained in step (h) or onto the thermoformed polycarbonate substrate with the cured ink thereon obtained in step (i), followed by drying or curing the coating layer.

### Step (a)

The polycarbonate substrate provided for in step (a) has the form of a sheet or film. The polycarbonate layer or film can have any width and/or length. The polycarbonate layer or film preferably has a thickness of between 0.1 and 12 mm, more preferably between 0.5 and 7 mm, such as 2, 3, 4, 5 or 6 mm.

The first surface of the polycarbonate substrate may be subjected to plasma treatment before step (c). In another embodiment, only those parts of the first surface of the polycarbonate substrate of step (a) that are printed on in step (g) are subjected to plasma treatment before step (c).

Likewise, the first surface of the polycarbonate substrate may be subjected to flame oxidation before step (c). In another embodiment, only those parts of the first surface of the polycarbonate substrate of step (a) that are printed on in step (g) are subj ected to flame oxidation before step (c).

Likewise, the first surface of the polycarbonate substrate may be subjected to corona treatment before step (c). In another embodiment, only those parts of the first surface of the polycarbonate substrate of step (a) that are printed on in step (g) are subjected to corona treatment before step (c).

Similarly, the first surface of the polycarbonate substrate may be subjected to UV treatment using a H-bulb before step (c). In another embodiment, only those parts of the first surface of the polycarbonate substrate of step (a) that are printed on in step (g) are subjected to UV treatment using a H-bulb before step (c).

The polycarbonate substrate provided for in step (a) can be a laminate having additional layers, provided that the at least part of the at least first surface of the polycarbonate substrate that is treated with the treating fluid is not laminated and can thus be treated and printed on.

In a preferred embodiment, the polycarbonate substrate provided for in step (a) is not a laminate.

If the polycarbonate substrate is not a laminate, and the second surface of the polycarbonate substrate is also printed on in step (g), the second surface may be subjected to plasma treatment, UV treatment using a H-bulb, corona treatment or flame oxidation before step (c). In another embodiment, if the polycarbonate substrate is not a laminate, and the second surface of the polycarbonate substrate is also printed on in step (g), only those parts of the second surface of the polycarbonate substrate of step (a) that are printed on in step (g) are subjected to plasma treatment, UV treatment using a H-bulb, corona treatment or flame oxidation before step (c).

In a very preferred embodiment, the polycarbonate in the polycarbonate substrate is the reaction product of monomers bisphenol A and phosgene. In another embodiment, the polycarbonate in the polycarbonate substrate is the reaction product of monomers bisphenol A and diphenyl carbonate. In still another embodiment, the polycarbonate in the polycarbonate substrate is a polycarbonate siloxane co-polymer based on bisphenol A, such as Lexan EXL (Sabic) and Lexan HFD (Sabic), or a polycarbonate sebacic acid co-polymer based on bisphenol A, such as Lexan SLX (Sabic). In yet another embodiment, the polycarbonate in the polycarbonate substrate is high heat polycarbonate, such as Apec (Covestro) or Lexan XHT (Sabic).

The polycarbonate in the polycarbonate substrate preferably has a weight average molecular weight *M*_{W} between 20 and 40 kDa, as measured in accordance with gel permeation chromatography, preferably between 25 and 35 kDa, such as 30 kDa.

The polycarbonate substrate preferably has a total luminous transmittance of at least 85% and a haze lower than 1% (both measured in accordance with ASTM D1003 - 2013).

### Step (b)

In step (b), a treating fluid is provided. The treating fluid comprises between 1 and 10 wt% of the one or more cyclic ketones being liquid at a temperature between 15 and 35°C, wherein the remainder of the treating fluid consists of a diluent chosen from the group consisting of diacetone alcohol, *n*-hexane, *n*-heptane and *n*-octane. The treating fluid is a homogeneous liquid at a temperature between 15 and 35°C, which means that the one or more cyclic ketones being liquid at a temperature between 15 and 35°C, and the diluent chosen from the group consisting of diacetone alcohol, *n*-hexane, *n*-heptane and *n*-octane, if present, are mutually soluble and do not phase separate at a temperature between 15 and 35°C.

In an embodiment, the treating fluid provided in step (b) comprises between 1 and 10 wt% of the one or more cyclic ketones being liquid at a temperature between 15 and 35°C, wherein the remainder of the treating fluid consists of diluent diacetone alcohol.

In another embodiment, the treating fluid in step (b) comprises:
between 1 and 8 wt% of the one or more cyclic ketones being liquid at a temperature between 15 and 35°C and between 92 and 99 wt% of the diluent chosen from the group consisting of diacetone alcohol, n-hexane, n-heptane and n-octane;
between 1 and 6 wt% of one or more cyclic ketones being liquid at a temperature between 15 and 35°C and between 94 and 99 wt% of the diluent chosen from the group consisting of diacetone alcohol, *n*-hexane, *n*-heptane and *n*-octane;
between 1 and 4 wt% of the one or more cyclic ketones being liquid at a temperature between 15 and 35°C and between 96 and 99 wt% of the diluent chosen from the group consisting of diacetone alcohol, *n*-hexane, *n*-heptane and *n*-octane;
between 1 and 3.5 wt% of the one or more cyclic ketones being liquid at a temperature between 15 and 35°C and between 96.5 and 99 wt% of the diluent chosen from the group consisting of diacetone alcohol, *n*-hexane, *n*-heptane and *n*-octane; or
between 1 and 3 wt% of the one or more cyclic ketones being liquid at a temperature between 15 and 35°C and between 97 and 99 wt% of the diluent chosen from the group consisting of diacetone alcohol, *n*-hexane, *n*-heptane and *n*-octane.

In another embodiment, the treating fluid in step (b) comprises:
between 1 and 8 wt% of the one or more cyclic ketones being liquid at a temperature between 15 and 35°C and between 92 and 99 wt% of diluent diacetone alcohol;
between 1 and 6 wt% of one or more cyclic ketones being liquid at a temperature between 15 and 35°C and between 94 and 99 wt% of diluent diacetone alcohol;
between 1 and 4 wt% of the one or more cyclic ketones being liquid at a temperature between 15 and 35°C and between 96 and 99 wt% of diluent diacetone alcohol;
between 1 and 3.5 wt% of the one or more cyclic ketones being liquid at a temperature between 15 and 35°C and between 96.5 and 99 wt% of diluent diacetone alcohol; or
between 1 and 3 wt% of the one or more cyclic ketones being liquid at a temperature between 15 and 35°C and between 97 and 99 wt% of diluent diacetone alcohol.

The one or more cyclic ketones being liquid at a temperature between 15 and 35°C are preferably selected from the group consisting of unsubstituted cyclic ketones, cyclic ketones substituted with at least one alkyl group and mixtures thereof. More preferably, the one or more cyclic ketones being liquid at a temperature between 15 and 35°C are selected from the group consisting of unsubstituted cyclic ketones and mixtures thereof.

In a preferred embodiment, the one or more cyclic ketones being liquid at a temperature between 15 and 35°C are not heterocyclic ketones.

In a particularly preferred embodiment, the one or more cyclic ketones being liquid at a temperature between 15 and 35°C are selected from the group consisting of cyclopentanone, 3,5,5-trimethyl-2-cyclohexen-1-one (isophorone), 1-cyclohexylpropan-1-one, 1-cyclohexylethanone, cyclohexanone and mixtures thereof, most preferably the cyclic ketone is cyclohexanone. In a preferred embodiment, the one or more cyclic ketones being liquid at a temperature between 15 and 35°C do not comprise isophorone.

In a very preferred embodiment, the treating liquid provided in step (b) comprises between 1 and 10 wt% of cyclohexanone, based on the weight of the homogeneous liquid phase, wherein the remainder of the treating fluid consists of the diluent chosen from the group consisting of diacetone alcohol, *n*-hexane, *n*-heptane and *n*-octane. In another very preferred embodiment, the treating liquid provided in step (b) comprises between 1 and 4 wt% of cyclohexanone and between 96 and 99 wt% of the diluent chosen from the group consisting of diacetone alcohol, *n*-hexane, *n*-heptane and *n*-octane.

In a most preferred embodiment, the diluent is n-heptane.

### Step (c)

In step (c), at least part of at least the first surface of the polycarbonate substrate of step (a) is treated with between 0.06 and 5 g/m², based on the treated area, of the treating fluid of step (b) for a period of at least 5 seconds, preferably at a temperature between 15 and 35°C. The wording *'at least part of at least the first surface'* means that only part of the first surface is treated or the whole first surface, or part of the first surface and part of the second surface or the whole first surface and the whole second surface.

The treatment of the polycarbonate substrate in step (c) with the treating fluid of step (b) results in swollen or plasticized areas where the surface of the polycarbonate substrate is treated. This swelling is caused by the one or more cyclic ketones being liquid at a temperature between 15 and 35°C in the treating fluid penetrating the polycarbonate substrate. As a result, the one or more cyclic ketones are distributed across at least part of the thickness of the polycarbonate substrate. As will be appreciated by those skilled in the art, if the thickness of the polycarbonate substrate is limited, and/or if both sides of the polycarbonate substrate are treated and/or if the period of treatment is extended, the one or more cyclic ketones can be distributed across the whole thickness of the polycarbonate substrate.

The method as defined hereinbefore is a method for printing radiation-curable ink onto a polycarbonate substrate. The inventors have established that the one or more cyclic ketones applied to the substrate do not only swell or plasticize the treated areas of polycarbonate substrate but may, depending on the amount of the one or more cyclic ketones applied, also affect the look and texture of the polycarbonate substrate. Applying too much of the one or more cyclic ketones may result in visual patterns and/or orange peel on the treated areas. Orange peel may negatively affect adhesion of the radiation-curable ink. Applying too much of the one or more cyclic ketones may further result in unwanted warping of the polycarbonate substrate.

Accordingly, between 0.06 and 5 g/m², preferably between 1.5 and 5 g/m², based on the treated area, of the treating fluid is applied to the at least part of at least the first surface of the polycarbonate substrate of step (a).

The inventors have found that the use of a diluent chosen from the group consisting of diacetone alcohol, *n*-hexane, *n*-heptane and *n*-octane in the treating fluid can diminish the visual patterns, whitening, haze and/or orange peel of the treated areas of the polycarbonate substrate and further the adhesion of the radiation-curable ink. Without wishing to be bound by any theory, it is believed that diluting the one or more cyclic ketones being liquid at a temperature between 15 and 35°C with a diluent chosen from the group consisting of diacetone alcohol, *n-*hexane, n-heptane and n-octane reduces the rate of evaporation of the one or more cyclic ketones from the polycarbonate substrate such that the one or more cyclic ketones can swell the polycarbonate substrate whereas they can also be partially removed in an oven without forming haze, whitening and visual patterns on the polycarbonate substrate.

In a preferred embodiment, the treatment in step (c) is performed for a period of at least 40 seconds, more preferably for a period of at least 60 seconds.

In an embodiment, the whole first surface of the polycarbonate substrate of step (a) is treated with the treating fluid of step (b) in step (c).

In an embodiment, the treating fluid is applied to at least the first surface of the polycarbonate substrate using a flow-through-felt dispensing system or using a spray dispensing system.

In another embodiment, the polycarbonate substrate is not laminated and both whole surfaces of the polycarbonate substrate of step (a) are treated in step (c) with the treating fluid of step (b). This can for example be performed by completely immersing the (not laminated) polycarbonate substrate of step (a) in the treating fluid of step (b) followed by immediate removal, resulting in a film layer of treating fluid onto both surfaces of the polycarbonate substrate.

In another preferred embodiment, only those parts of the first surface of the polycarbonate substrate of step (a) that are printed on in step (g) are treated with the treating fluid of step (b) in step (c). In still another preferred embodiment, those parts of the first surface of the polycarbonate substrate of step (a) that are printed on in step (g) are treated with the treating fluid of step (b) in step (c), with the proviso that the treated area is slightly larger than the area that is to be printed on in step (g), wherein slightly larger means 10% larger, preferably 8% larger, more preferably 5% larger. This can for example be accomplished using inkjet printing of the treating fluid of step (b) onto the polycarbonate substrate, such as piezo drop on demand inkjet printing or continuous inkjet printing, preferably continuous inkjet printing. This can also be accomplished using a flow-through-felt dispensing system or a spray dispensing system. Employing inkjet printing to apply the treating liquid onto the polycarbonate substrate may require the addition of one or more of thickeners and surfactants to the treating liquid before step (c) to adjust the viscosity, rheology and/or (dynamic) surface tension.

As explained hereinbefore, applying too much of the one or more cyclic ketones may result in unwanted warping of the polycarbonate substrate, particularly if the polycarbonate substrate has a thickness of between 0.1 and 0.5 mm. Hence, in a preferred embodiment, the polycarbonate substrate of step (a) has a thickness of between 0.1 and 0.5 mm, and only those parts of the first surface of the polycarbonate substrate of step (a) that are printed on in step (g) are treated with the treating fluid of step (b) in step (c), preferably using inkjet printing, by using a flow-through-felt dispensing system or by using a spray dispensing system. In another preferred embodiment, the polycarbonate substrate of step (a) has a thickness of between 0.1 and 0.5 mm, and only those parts of the first surface of the polycarbonate substrate of step (a) that are printed on in step (g) are treated with the treating fluid of step (b) in step (c), preferably using inkjet printing, by using a flow-through-felt dispensing system or by using a spray dispensing system, in an amount of between 0.06 and 4 g/m², based on the treated area.

In another embodiment, the polycarbonate substrate is not laminated, both surfaces of the polycarbonate substrate are printed on in step (g) and only those parts of the first and second surfaces of the polycarbonate substrate of step (a) that are printed on in step (g) are treated in step (c) with the treating fluid of step (b). In still another preferred embodiment, those parts of the first and second surface of the polycarbonate substrate of step (a) that are printed on in step (g) are treated with the treating fluid of step (b) in step (c), with the proviso that the treated area is slightly larger than the area that is to be printed on in step (g), wherein slightly larger means 10% larger, preferably 8% larger, more preferably 5% larger. This can for example be accomplished using inkjet printing of the treating fluid of step (b) onto the polycarbonate substrate, such as piezo drop on demand inkjet printing or continuous inkjet printing, preferably continuous inkjet printing. This can also be accomplished using a flow-through-felt dispensing system or by using a spray dispensing system. As will be appreciated by the skilled person, the first surface of the polycarbonate substrate can be treated with the treating liquid first and then the second surface. Optional steps (d) and (e) can be performed in between treating the first and the second surface of the polycarbonate substrate. Moreover, printing step (g) and curing step (h) can be performed on the treated first surface of the polycarbonate substrate of step (f) before the second surface of the polycarbonate substrate is treated with the treating fluid.

In a preferred embodiment, the one or more cyclic ketones of the treating fluid of step (b) are homogeneously distributed across at least part of the thickness of the polycarbonate substrate obtained in step (c).

In a preferred embodiment, the treated polycarbonate obtained in step (c) has a total luminous transmittance of at least 85% and a haze lower than 1% (both measured in accordance with ASTM D1003 - 2013).

### Steps (d) and (e)

Without wishing to be bound by any theory, it is believed that an excess of the treating fluid applied onto and/or distributed across at least part of the thickness of the polycarbonate substrate adversely affects wetting by and adhesion of radiation-curable ink in step (g).

Hence, as defined in step (f), before applying the radiation-curable ink in step (g), the combined amounts of the treating fluid on and in the treated polycarbonate substrate is between 1 ppm and 0.4 wt%, based on the weight of the treated polycarbonate substrate. In an embodiment, before applying the radiation-curable ink in step (g), the combined amounts of the treating fluid on and in the treated polycarbonate substrate is between 0.05 and 0.4 wt%, based on the weight of the treated polycarbonate substrate.

In a preferred embodiment, the wording *'on and*/*or in the treated polycarbonate substrate"* means *'on and in the treated polycarbonate substrate".*

It was found that the treated polycarbonate surface returned to the *'closed'* non-swollen state when all of said treating fluid was removed from the treated polycarbonate substrate. On the other hand it was established that leaving more than 1 wt% of the combined amounts of the treating fluid, based on the weight of the treating fluid, on and in the treated polycarbonate substrate resulted in inferior print quality. Good print quality, in terms of adhesion and surface smoothness (no cracking), was obtained when the amount of the treating fluid was between 1 ppm and 1 wt%, such as between 0.05 and 1 wt%, based on the weight of the treated polycarbonate substrate just before printing.

In a preferred embodiment, the combined amounts of the treating fluid on and in the treated polycarbonate substrate obtained in optional step (e) and provided in step (f) is between 1 ppm and 0.3 wt%, more preferably between 1 ppm and 0.2 wt%, such as about 0.1 wt%, based on the weight of the treated polycarbonate substrate.

Reduction of the combined amounts of the treating fluid on and in the treated polycarbonate substrate to between 1 ppm and 0.4 wt% is believed to prevent or reduce blistering in laminates prepared from the printed polycarbonate substrate obtained in step (h).

As explained hereinbefore, the one or more cyclic ketones of the treating fluid of step (b) are distributed across at least part of the thickness of the polycarbonate substrate obtained in step (c). In a very preferred embodiment, the wording *'based on the weight of the treated polycarbonate substrate"* in the context of the amount of the treating fluid in optional step (e) and in step (f) concerns the weight of the treated part of the polycarbonate substrate up to the depth that it has been treated with the one or more cyclic ketones of the treating fluid, *i.e.* based on the weight of that part that has been treated and on that part of the thickness of the polycarbonate substrate across which the one or more cyclic ketones of the treating fluid are distributed.

In an embodiment the method as defined hereinbefore comprises step (d) as a mandatory step. Such a step is only expedient if the whole first surface, or the whole first and second surfaces, of the polycarbonate surface has been treated in step (c). Moreover, such a step is only expedient if there are any leftovers of the treating fluid on the first and/or second surface that are not absorbed by said surfaces after step (c).

Step (d) can for example be performed by by rinsing the treated polycarbonate substrate obtained in step (c) 1 to 10 times, such as 2, 3 or 4 times, with the diluent, such as diacetone alcohol.

In a preferred embodiment the method as defined hereinbefore comprises step (e) as a mandatory step, more preferably steps (d) and (e), to obtain the combined amounts of the treating fluid on and in the treated polycarbonate substrate as defined in step (f).

The drying of the treated polycarbonate substrate in step (e) is preferably performed in a hot air circulating oven, preferably at a temperature of between 35 and 120°C. Drying in a hot air circulating oven is preferably applied when the treating liquid comprises diluent diacetone alcohol.

In another preferred embodiment, the drying of the treated polycarbonate substrate in step (e) is performed by evaporation under ambient conditions, for example for a period of at least 10 hours preferably between 10 and 20 hours, such as about 12 hours. Drying by evaporation under ambient conditions for a period of at least 10 hours preferably between 10 and 20 hours, such as about 12 hours, is preferably applied when the treating liquid does not comprise a diluent.

In another embodiment, when the treating liquid comprises a diluent chosen from the group consisting of diacetone alcohol, *n*-hexane, *n*-heptane and *n*-octane, the drying of the treated polycarbonate substrate in step (e) is preferably performed by evaporation under ambient conditions for a period of at least 10 minutes, preferably at least 5 minutes, more preferably at least 2 minutes. Drying by evaporation under ambient conditions is preferably applied when the treating liquid comprises a diluent chosen from the group consisting of *n-*hexane, *n*-heptane and *n*-octane.

In a preferred embodiment, the treated polycarbonate obtained in step (d) and/or (e) has a total luminous transmittance of at least 85% and a haze lower than 1% (both measured in accordance with ASTM D1003 - 2013).

### Step (f)

In step (f), the treated polycarbonate substrate is provided obtained in any one of steps (c) to (e) wherein the combined amounts of the treating fluid on and in the treated polycarbonate substrate is between 1 ppm and 0.4 wt%, based on the weight of the treated polycarbonate substrate.

In a preferred embodiment, the combined amounts of the treating fluid on and in the treated polycarbonate substrate in step (f) is between 1 ppm and 0.3 wt%, more preferably between 1 ppm and 0.2 wt%, such as about 0.1 wt%, based on the weight of the treated polycarbonate substrate.

The combined amounts of the treating fluid on and in the treated polycarbonate substrate provided in step (f) can be the direct result of step (c) such that steps (d) and (e) are not necessary. Alternatively, the amount of the treating fluid on and/or in the treated polycarbonate substrate of step (f) is obtained by applying step (d) or steps (d) and (e).

In a preferred embodiment, the treated polycarbonate provided in step (f) has a total luminous transmittance of at least 85% and a haze lower than 1% (both measured in accordance with ASTM D1003 - 2013).

### Step (g)

In step (g), radiation-curable ink is applied to at least part of the swollen areas of the at least first surface of the treated polycarbonate substrate provided in step (f) using inkjet printing.

The term radiation-curable ink as used herein refers to ink that is applied in liquid form and is fixed onto the substrate upon treatment with radiation. Typical types of radiation that can be used to cure inks are infrared radiation (heat), UV-radiation, electron-beam radiation and combinations thereof. The type/types of radiation that can be applied or is/are required to cure a radiation-curable ink depend(s) on the composition of the radiation-curable ink.

In a first preferred embodiment, the radiation-curable ink in step (g) is a UV-curable ink. The term *'UV-curable ink'* is well-known in the art of printing and refers to inks comprising liquid reactive monomers and/or oligomers, a UV photoinitiator and preferably dyes or pigments. Upon excitation with UV-light, the UV photoinitiator forms reactive species that can initiate oligomerization, polymerization and/or crosslinking of the reactive monomers and/or oligomers.

In a preferred embodiment, the reactive monomers and/or oligomers comprise radically polymerizable monomers and/or oligomers chosen from the group consisting of acrylates, vinyl ethers, allyl ethers, maleimides, thiols and mixtures thereof.

In another preferred embodiment, the reactive monomers and/or oligomers comprise cationically polymerizable monomers and/or oligomers chosen from the group consisting of epoxides, vinyl ethers, allyl ethers, oxetanes and combinations thereof.

The monomers and/or oligomers may comprise cross-linking monomers and/or oligomers. Cross-linking monomers and/or oligomers have, depending on the type of reactive group, two or more reactive groups per monomer, and can create a three-dimensional network.

Naturally, radically polymerizable monomers and/or oligomers are to be combined with one or more radical polymerization photoinitiators and cationically polymerizable resins are to be combined with one or more cationic polymerization photoinitiators.

Photoinitiators for radical polymerization and cationic polymerization are well-known in the art. In this regard, reference is made to J.P. Fouassier, J.F. Rabek (ed.), Radiation Curing in Polymer Science and Technology: Photoinitiating systems, Vol. 2, Elsevier Applied Science, London and New York 1993, and to J.V. Crivello, K. Dietliker, Photoinitiators for Free Radical, Cationic & Anionic Photopolymerization, 2nd Ed., In: Surface Coating Technology, Editor: G. Bradley, Vol. III, Wiley & Sons, Chichester, 1999, for a comprehensive overview of photoinitiators. It is within the skills of the artisan to match the type of polymerizable resin, the type of radiation and the photoinitiator.

In a very preferred embodiment, the UV-curable ink comprises (based on the weight of the UV-curable ink):
- between 20 and 30 wt% 2-(2-vinyloxyethoxy) ethyl acrylate;
- between 10 and 20 wt% oxybis(methyl-2,1-ethanediyl) diacrylate;
- between 10 and 20 wt% 4-(1,1-dimethylethyl)cyclohexyl acrylate;
- between 5 and 10 wt% butylcarbamate monomer;
- between 1 and 5 wt% 2-methyl-1-(4-methylthiophenyl)-2-morpholinopropan-1-one;
- preferably between 1 and 5 wt% carbon black (carbon);
- between 10 and 20 wt% ethoxylated trimethylolpropane triacrylate;
- between 1 and 5 wt% 2-isopropyl-9H-thioxanthen-9-one;
- between 1 and 5 wt% pigment;
- between 1 and 5 wt% ethyl-4-dimethylaminobenzoate; and
- between 1 and 5 wt% 2-benzyl-2-dimethylamino-4-morpholinobutyrophenone.

UV-curable inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

In another preferred embodiment, the radiation-curable ink in step (g) is an EB-curable ink. The term *'EB-curable ink'* is also well-known in the art of printing and refers to inks comprising liquid reactive monomers and/or oligomers and preferably dyes or pigments. Upon excitation with radiation from an electron beam, also called a cathode-ray tube (CRT), energetic electrons initiate oligomerization, polymerization and/or crosslinking of the reactive monomers and/or oligomers. Hence, expensive UV photoinitiators are not needed, but can nevertheless be present, in EB-curable inks.

Preferred reactive monomers and/or oligomers are those described hereinbefore in the context of UV-curable inks.

EB-curable inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

In still another preferred embodiment, the radiation-curable ink in step (g) is a solvent-based ink. The term *'solvent-based ink'* is well-known in the art of printing and refers to inks comprising resin, dyes or pigments and a non-aqueous and non-reactive carrier solvent that keeps the other components in liquid form. They are typically applied onto non-porous substrates. Examples of resins that can be part of solvent-based inks are vinyl-based, vinyl-acrylic-based, epoxy-based, polyurethane-based or cellulose-based.

Radiation-curable solvent-based inks for use in the present method can also comprise metal nanoparticles dispersed therein, molecularly dissolved metal-precursors or dispersed metal-precursor nanoparticles to provide conductive tracks on the treated polycarbonate substrate. Preferred metal nanoparticles are silver nanoparticles or copper nanoparticles. Preferred metal-precursor nanoparticles are copper oxide nanoparticles.

General examples of radiation-curable ink on a solvent basis comprising metal nanoparticles that can suitably be used in the method of the present invention are disclosed in US2009/0053400A1. Specific examples of radiation-curable ink on a solvent basis comprising metal nanoparticles that can suitably be used in the method of the present invention are DuPont^{™} PE410, comprising silver particles, and Agfa ORGACON^{™} SI-J20X, comprising silver nanoparticles.

The radiation-curable ink is applied to at least part of the swollen areas of the treated at least first surface of step (f) using inkjet printing.

In a preferred embodiment, the radiation-curable ink is applied using piezo drop on demand inkjet printing or continuous inkjet printing, more preferably piezo drop on demand inkjet printing.

The radiation-curable ink as defined hereinbefore typically comprises additives to control rheology and droplet formation, such as surfactants and anti-foaming agents.

In a very preferred embodiment, the ink has a static surface tension at a temperature of 20 °C of between 30 and 60 mN/m as measured with a tensiometer, more preferably between 20 and 40 mN/m, even more preferably between 25 and 35 mN/m.

In another preferred embodiment, the radiation-curable ink as defined hereinbefore is a Newtonian fluid having a viscosity at a temperature of 20°C of between 1 and 100 mPa·s at a shear rate of between 100 and 1000 1/s, more preferably between 2 and 40 mPa·s, even more preferably between 5 and 25 mPa·s, still more preferably between 8 and 15 mPa·s.

In another embodiment, at least part of the second surface of the polycarbonate substrate is also treated with the treating fluid in step (c) and radiation-curable ink is applied to at least part of the swollen areas of the treated second surface of step (f). Preferably, radiation-curable ink is applied to the second surface only after the radiation-curable ink on the first surface has been cured in step (h).

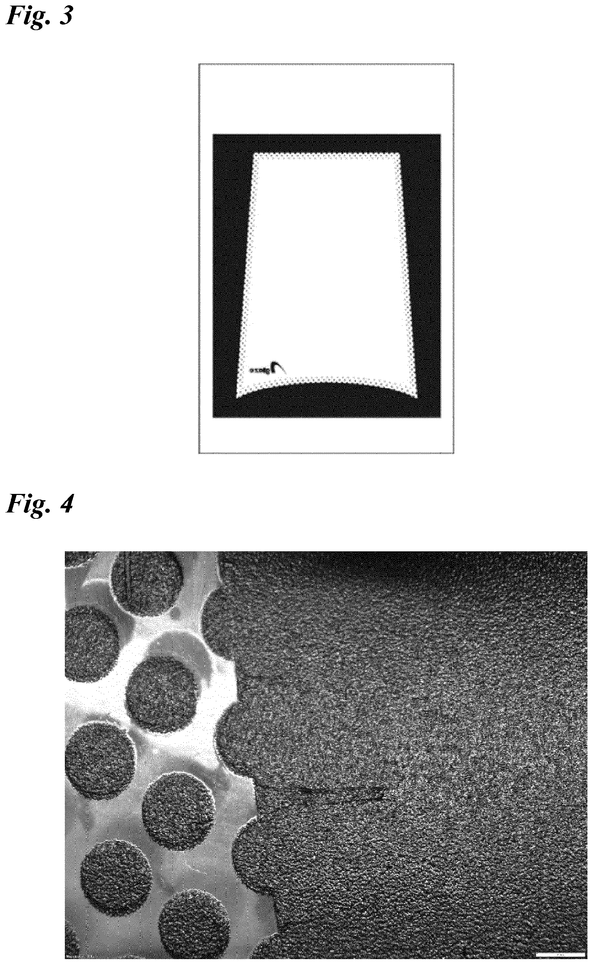

In an embodiment, the image or pattern printed in step (g) is a black obscuration band with matrix dots, typical for vehicle glazing (see Figure 3 for an example of such a printed pattern). In another embodiment, the image or pattern printed in step (g) is a black obscuration band with matrix dots, typical for vehicle glazing, along with conductive tracks. The black obscuration band with matrix dots can for example be printed with a black UV-curable ink and the conductive tracks with a UV-curable ink comprising metal nanoparticles dispersed therein, molecularly dissolved metal-precursors or dispersed metal-precursor nanoparticles.

### Step (h)

In step (h), the radiation-curable ink applied in step (g) is cured such that the ink adheres to the surface of the treated polycarbonate substrate. The term *'curing'* as used herein means that the liquid ink deposited onto the surface of the polycarbonate substrate takes a solid or at least semi-solid form.

The curing mechanism of radiation-curable solvent-based inks differs from the curing mechanism of UV-curable and EB-curable inks. For radiation-curable solvent-based inks, curing requires evaporation of the solvent such that the resin can form a film layer onto the treated polycarbonate substrate. This can be accomplished by thermal drying, *i.e.* by applying infrared radiation.

Hence, in a preferred embodiment, the radiation-curable ink applied in step (g) is a radiation-curable solvent-based ink and curing in step (h) encompasses applying infrared radiation at a temperature of between 80 and 130°C for a period of between 10 and 60 minutes, preferably in an oven.

For UV-curable inks, curing requires subjecting the UV-curable ink deposited onto the treated polycarbonate substrate to UV- or EB-radiation. This radiation can be energetic electrons, X-rays or UV-radiation causing the reactive monomers and/or oligomers to react and/or crosslink. As explained hereinbefore, curing using UV-radiation requires the presence of UV photoinitiators in the radiation-curable composition. The type of photoinitiator applied determines the (optimum) wavelength of the UV-radiation needed. There are photoinitiators that are responsive to a broad spectrum of wavelengths in the UV-A (315-400 nm), UV-B (280-315 nm), and/or UV-C (100-280 nm) ranges. There are also photoinitiators that are responsive to the light of UV-leds emitting specific wavelengths such as about 365 nm, about 385 nm, about 395 nm, or about 405 nm.

Hence, in a preferred embodiment, the radiation-curable ink applied in step (g) is a UV-curable ink and curing in step (h) encompasses applying UV-radiation or EB-radiation to the ink layer. The amount of UV-radiation or EB-radiation determines the degree of cure. The amount of UV-radiation or EB-radiation can be chosen to fully cure the ink layer (so-called through cure) in one step, meaning that additional UV-radiation or EB-radiation does no longer result in a decrease of reactive groups in the ink layer. Alternatively, the amount of UV-radiation or EB-radiation can be chosen to partially cure the layer in a first step and fully cure the layer in a second step. If the print obtained in step (h) is to be laminated or over-coated with an additional layer, partial curing of the UV-curable ink in a first step, laminating or coating and subsequent fully curing the ink layer in a second step may be appropriate to get sufficient adhesion between the ink layer and the additional layer. If this two-step approach is used along with UV-radiation to cure the ink, the additional layer must not absorb UV-radiation.

For EB-curable inks, curing requires subjecting the EB-curable ink deposited onto the treated polycarbonate substrate to EB-radiation. This radiation comprises energetic electrons and X-rays. Curing using energetic electrons has the advantage that the energetic electron may create reactive species both in the ink and in the treated first surface of the polycarbonate layer such that chemical reactions may occur in the interface between ink and polycarbonate, resulting in additional adhesion.

Hence, in a preferred embodiment, the radiation-curable ink applied in step (g) is an EB-curable ink and curing in step (h) encompasses applying EB-radiation to the ink layer. The amount of EB-radiation determines the degree of cure. The amount of EB-radiation can be chosen to fully cure the ink layer (so-called through cure) in a single step, meaning that additional EB-radiation does no longer result in a decrease of reactive groups in the ink layer. Alternatively, the amount of EB-radiation can be chosen to partially cure the ink layer in a first step and fully cure the layer in a second step. If the print obtained in step (h) is to be laminated or over-coated with an additional layer, partial curing of the EB-curable ink in a first step, laminating/coating and subsequent fully curing the ink layer in a second step may be appropriate to get sufficient adhesion between the ink layer and the additional layer.

As explained hereinbefore the radiation-curable inks chosen from UV-curable, EB-curable and solvent-based inks can comprise metal nanoparticles dispersed therein, molecularly dissolved metal-precursors or dispersed metal-precursor nanoparticles to provide conductive tracks on the treated polycarbonate substrate. In order to enhance the electrical conductivity of the printed layers of radiation-curable inks on the polycarbonate surface, the metal nanoparticles may need to be sintered.

The term *'sintering'* in the context of the present invention should be construed as a method of forming aggregates of metal particles by heating them to a temperature below the melting temperature of the metal. During sintering, atoms at the surface of the metal nanoparticles diffuse across the surface causing fusion of the metal resulting in a more dense material. This diffusion takes place within a range of temperatures (substantially) below the melting temperature of the metal and is highest when the temperature is close to the melting temperature. It is within the skills of the artisan to choose appropriate sintering conditions that do not adversely affect the polycarbonate substrate.

Known sintering techniques for inkjet inks comprising metal nanoparticles or metallo-organic complexes are thermal sintering, photonic sintering, microwave sintering, plasma sintering, electrical sintering and sintering by chemical agents. In this respect, reference is made to A. Kamyshny et al., Metal-based inkjet inks for printed electronics, The Open Applied Physics Journal, 2011, 4, pp 19-36.

For solvent-based inks, such a sintering step may be part of the curing step (h) with infrared radiation that is already needed to evaporate the solvent. For example, DUPONT^{™} PE410 silver inkjet ink is preferably dried at 130°C for 20 minutes to enhance conductivity. Agfa ORGACON^{™} SI-J20x nanosilver inkjet printing ink is preferably dried at 150°C for 30 minutes to sinter the silver particles and enhance electrical conductivity.

Hence, in a preferred embodiment, the radiation-curable ink applied in step (g) is a radiation-curable solvent-based ink comprising metal nanoparticles and curing in step (h) encompasses applying infrared radiation at a temperature of between 100 and 150°C for a period of between 10 and 60 minutes, preferably in an oven.

If the solvent-based ink comprises a metal precursor, the metal precursor needs to be converted to the metal before sintering can take place as an additional step. In an embodiment, the radiation-curable ink applied in step (g) is a radiation-curable solvent-based ink comprising metal precursor and curing step (h) is followed by a step of converting the metal precursor to the corresponding metal and a subsequent sintering step wherein infrared radiation is applied at a temperature of between 100 and 150°C for a period of between 10 and 60 minutes, preferably in an oven.

For UV-curable and EB-curable inks, a sintering step is always an additional step performed after curing step (h).

Hence, in a preferred embodiment, the radiation-curable ink applied in step (g) is a UV-curable or EB-curable ink comprising metal nanoparticles and curing step (h) is followed by a sintering step wherein infrared radiation is applied at a temperature of between 100 and 150°C for a period of between 10 and 60 minutes, preferably in an oven.

If the UV-curable or EB-curable ink comprises a metal precursor, the metal precursor needs to be converted to the metal before sintering can take place as an additional step. In an embodiment, the radiation-curable ink applied in step (g) is a UV-curable or EB-curable ink comprising metal precursor and curing step (h) is followed by a step of converting the metal precursor to the corresponding metal and a subsequent sintering step wherein infrared radiation is applied at a temperature of between 100 and 150°C for a period of between 10 and 60 minutes, preferably in an oven.

In a preferred embodiment, sintering of the metal in cured solvent-based, UV-curable or EB-curable ink as defined hereinbefore, after step (g), is performed using photonic curing with a flash lamp, *i.e.* with pulsed light, for example from a Xenon flash lamp, having a pulse length of about 10 microseconds to 15 milliseconds.

Photonic curing uses flash lamps to thermal process a thin film, such as a cured ink layer with metal therein, at a high temperature on a low temperature substrate, such as a polycarbonate substrate, without damaging it. In this respect, reference is made to K.A. Schroder, Mechanisms of Photonic Curing™: Processing High Temperature Films on Low Temperature Substrates, TechConnect Briefs, Volume 2, Nanotechnology 2011: Electronics, Devices, Fabrication, MEMS, Fluidics and Computational, pp 220-223, and to patent US7,820,097B1. With this technique silver and copper nanoparticles can be sintered. The pulse of the light of the flash lamp is so fast that the back side of the substrate is not heated appreciably during the pulse. After the pulse is over, the thermal mass of the substrate rapidly cools the layer with metal particles. The pulse is usually less than a millisecond in duration. Although the substrate at the interface with the ink layer with metal particles reaches a temperature far beyond its maximum working temperature, there is not enough time for its properties to be significantly changed.

As described hereinbefore, the printed polycarbonate surface obtained in step (h) may be laminated with another layer. Examples of additional layers that can advantageously be used are polycarbonate films or sheets, or thermoplastic polyurethane films or sheets. As will be appreciated by those skilled in the art, an additional polycarbonate layer to be laminated with the printed polycarbonate surface obtained in step (h) may be treated at the surface that is to be laminated with a treating fluid as defined hereinbefore before lamination. Likewise, an additional thermoplastic polyurethane layer to be laminated with the printed polycarbonate surface obtained in step (h) may be treated at the surface that is to be laminated with a treating fluid as defined hereinbefore before lamination.

In another preferred embodiment, an additional thermoplastic polyurethane layer to be laminated with the printed polycarbonate surface obtained in step (h) may be obtained by:
i) providing a thermoplastic polyurethane film having a thickness and having a first and a second surface;
ii) providing one or more organic T-type photochromic compounds;
iii) providing a solvent selected from the group of cyclic ketones as defined hereinbefore;
iv) preparing a solution by dissolving at least 0.1 wt%, based on the weight of the solution, of the one or more organic T-type photochromic compounds of step (ii) in the solvent of step (iii);
v) treating at least part of at least the first surface of the thermoplastic polyurethane film of step (i) with at least 100 g/m² of the solution of step (iv) for a period of at least 5 seconds at a temperature between 15 and 30°C, resulting in a self-supporting photochromic polymer film with swollen areas where the surface is treated with the solution, wherein the one or more organic T-type photochromic compounds and the solvent are distributed across at least part of the thickness of the thermoplastic polyurethane film;
vi) optionally removing an excess of the solution applied in step (v) from the surface of the self-supporting photochromic polymer film obtained in step (v);
vii) optionally drying the self-supporting photochromic polymer film obtained in step (v) or (vi) to reduce the weight percentage of solvent in the self-supporting photochromic polymer film.

The thermoplastic polyurethane film preferably has a thickness of between 0.05 mm and 6.50 mm, more preferably between 0.08 mm and 2.60 mm, even more preferably between 0.09 mm and 0.68 mm, such as about 0.1 mm, about 0.38 mm or about 0.63 mm.

The one or more organic T-type photochromic compounds are preferably selected from the group consisting of spiropyrans, spirooxazines, naphthopyrans and combinations thereof, more preferably from the group consisting of spirooxazines, naphthopyrans and combinations thereof. Examples of these organic T-type photochromic compounds are, for example, described in M.A. Chowdhury et al., Journal of Engineered Fibers and Fabrics, 9(1) (2014), pp 107-123.

More preferably, the one or more organic T-type photochromic compounds are selected from polydialkylsiloxane-substituted naphthopyrans, still more preferably from polydialkylsiloxane-substituted naphthopyrans capable of taking on a blue colour or a green colour when irradiated with ultraviolet radiation.

Polydiakylsiloxane-substituted naphthopyrans are for example described in US8,865,029B2, *i.e.* the photochromic molecules outlined in Example 3, column 46, line 42 to column 50, line 2, Example 4, column 50, line 4 to column 51 line 4, Example 6, column 62, line 50 to column 53, line 30, Example 7, column 53, line 32 to column 54, line 20, and Example 9, column 57, line 50 to column 63, line 20.

Polydiakylsiloxane-substituted naphthopyrans, sufficiently soluble in e.g. cyclohexanone at room temperature, are for example Reversacol Pennine Green, Reversacol Sea Green and Reversacol Humber Blue (Vivimed Labs Ltd).

In a very preferred embodiment, the thermoplastic polyurethane film in the self-supporting photochromic polymer film comprises at least two organic T-type photochromic compounds.

Preferred organic T-type photochromic compounds are activated upon exposure to radiation having a wavelength of between 360 nm and 450 nm, preferably between 360 and 400 nm, between 370 nm and 390 nm, or between 360 and 380 nm.

The printed polycarbonate surface obtained in step (h), optionally laminated with another layer, may in a subsequent step be transformed into a three-dimensional form, preferably using thermoforming (see step (i)).

### Step (i)

In an embodiment, step (i) is mandatory. In step (i), the polycarbonate substrate with the cured ink thereon obtained in step (h) is subjected to thermoforming. Thermoforming, in the context of the present invention, is a manufacturing process wherein a polycarbonate sheet is heated to its softening temperature, formed to a specific shape in or over a mould, optionally using vacuum and/or pressure, and subsequently cooled. In principle, thermoforming of polycarbonate substrates can be applied at temperatures between 135 °C and 225°C, provided that a load or pressure may be needed at the lower temperatures.

During thermoforming, excess moisture present in and on the polycarbonate substrate can cause bubbling and other surface appearance problems as well as a reduction in property performance. Hence, it is preferred that excess moisture is removed before applying thermoforming step (i). In a preferred embodiment, the polycarbonate substrate with the cured ink thereon obtained in step (h) is subjected to a drying step at a temperature of 125 °C or lower before thermoforming step (i). This drying step can for example be performed in a hot-air circulating oven with replacement of the air at regular time intervals for the removal of water vapor.

There are a number of different thermoforming techniques that can be applied, some of which only require heating to allow the polycarbonate substrate to conform to a simple positive or negative mould as in drape forming. Drape forming is the simplest of all the thermoforming techniques. Using either a male or a female mould, the polycarbonate substrate is heated and allowed to conform to the shape of the mould under its own weight or with slight mechanical pressure. The process typically involves placing the polycarbonate substrate and mould in a hot-air circulating oven. The temperature is raised to the point where the sheet sags (between 140-165°C) and conforms to the shape of the mould. After cooling, the product can be removed from the mould.

Other thermoforming techniques, such as vacuum and pressure forming require that, after heating, the polycarbonate substrate is made to conform to a mould by applying pressure or a vacuum. The polycarbonate substrate is first clamped along all edges inside a clamping frame. A heat source is moved over the polycarbonate substrate raising its temperature until it is elastic. The heat source is removed and the mould table raised. The air in the space between the polycarbonate substrate and the mould is evacuated and the polycarbonate substrate is drawn towards the mould and takes its form. Pressure can also be applied to the positive side of the mould to reproduce detailed mould features. The polycarbonate substrate is subsequently cooled, the mould moved downwards, and the product is taken out. The clamping edges are removed from the product. Typical thermoforming temperatures in processes using vacuum or pressure forming are between 170 and 225 °C.

If the thermoforming step (i) is performed in a hot-air circulating oven, the optional drying step at a temperature of 125 °C or lower can be combined with the actual thermoforming step (i) in the hot-air circulating oven by starting at the temperature of 125 °C or lower and by subsequently increasing the temperature to the thermoforming temperature.

Types of thermoforming that can advantageously be applied in the process according to the invention include drape forming, vacuum forming, pressure forming, positive forming, negative forming, bubble forming, plug-assisted forming and combinations thereof.

In a preferred embodiment, the thermoforming step (i) comprises drape forming, more preferably drape forming at a temperature between 135 and 165°C for a period between 5 and 60 minutes, even more preferably at a temperature between 140 and 160°C for a period between 20 and 40 minutes.

The thermoformed polycarbonate substrate is preferably cooled to a temperature of 125 °C or lower before it is removed from the mould.

If step (j) of applying a coating layer is not performed, if necessary, additional machining can be carried out on the thermoformed polycarbonate substrate to finish the product, such as trimming, cutting, sawing and drilling.

### Step (j)

In an embodiment, step (j) is mandatory. In step (j), a coating layer is applied onto at least part of the at least first surface of the polycarbonate substrate with the cured ink thereon obtained in step (h) or onto at least part of at least the first surface of the thermoformed polycarbonate substrate with the cured ink thereon obtained in step (i), followed by drying or curing the coating layer. Accordingly, in a preferred embodiment, steps (i) and (j) are mandatory. The wording *'onto at least part of at least the first surface'* means that only part of the first surface is coated in step (j) or the whole first surface, or part of the first surface and part of the second surface or the whole first surface and the whole second surface.

In a preferred embodiment, a coating layer is applied onto the at least part of at least the first surface of the thermoformed polycarbonate substrate with the cured ink thereon obtained in step (i), followed by drying or curing the coating layer. In a more preferred embodiment, a coating layer is applied onto the whole surface of at least the first surface of the thermoformed polycarbonate substrate with the cured ink thereon obtained in step (i), followed by drying or curing the coating layer. This means that the coating layer is applied onto any part of at least the first surface of the thermoformed polycarbonate that has not been treated in step (c) with treating fluid, onto that part of at least the first surface of the thermoformed polycarbonate that has been treated in step (c) with treating fluid and that has been inkjet printed on in step (g) and onto that part of at least the first surface of the thermoformed polycarbonate that has been treated in step (c) with treating fluid and that has not been inkjet printed on in step (g).

In an embodiment, the coating layer is applied in step (j) using flow, dip or spray coating, preferably flow coating.

In a preferred embodiment, the coating layer applied in step (j) is a hardcoat system, such as a hardcoat system for vehicle glazing, more particularly a hardcoat system meeting the following requirements:
- No chemical attack (by window cleaning solution, undiluted denatured alcohol, petrol and reference kerosene, in accordance with UN ECE Regulation 43, Revision 4, *Uniform provisions concerning the approval of safety glazing materials and their installation on vehicles,* 3 April 2017, Annex 3, paragraph 11; 11.1-11.2.6.2.2);
- Passing headform test (in accordance with UN ECE Regulation 43, Revision 4, *Uniform provisions concerning the approval of safety glazing materials and their installation on vehicles,* 3 April 2017, Annex 3, paragraph 3; 3.2-3.2.6); and
- Passing 227 g ball drop test at -18 °C (in accordance with UN ECE Regulation 43, Revision 4, *Uniform provisions concerning the approval of safety glazing materials and their installation on vehicles,* 3 April 2017, Annex 3, paragraph 2; 2.1-2.2.4).

The term *'hardcoat system"* as used herein can encompass a primer composition that is to be applied first and a topcoat composition that is to be applied onto the primer composition. In an embodiment, the hardcoat system comprises a polymeric primer composition and a siloxanol resin/colloidal silica topcoat composition. Typically, the layer thickness of the combined primer and topcoat layers is between 3 and 12 µm.

Drying or curing the coating layer is preferably performed at a temperature of between 120 and 140 °C for a period between 30 and 60 minutes, preferably in a hot-air circulating oven.

In a preferred embodiment, the cured inkjet printed dots repel the hardcoat system before drying or curing the hardcoat system. The inventors have established that traces of the hardcoat system that are positioned on a full coverage area of a cured inkjet printed area that repels the hardcoat system can be easily removed by wiping with a good solvent for the hardcaot system. Hence, in a preferred embodiment the cured inkjet printed dots repel the hardcoat system, and any full coverage area of the cured inkjet printed pattern is wiped with a good solvent for the hardcoat system before drying or curing the hardcoat system.

In a second aspect, the invention relates to inkjet printed polycarbonate substrates obtained by or obtainable by the method as defined hereinbefore.

In a preferred embodiment, the inkjet printed polycarbonate substrates are inkjet printed electronics.

In a very preferred embodiment, the inkjet printed polycarbonate substrates obtained by or obtainable by the process as defined hereinbefore are chosen from the group consisting of decorated windows and heatable windows, for example for the automotive industry, in-mould electronics, printed antennas, printed RFID-tags, printed capacitive switches, printed capacitive light guides, and printed chip ID cards.

In a very preferred embodiment, the inkjet printed polycarbonate substrates obtained by or obtainable by the process as defined hereinbefore have an adhesion value GT of 0 as determined in accordance with DIN EN ISO 2409-2013.

In an even more preferred embodiment, the inkjet printed polycarbonate substrates obtained by or obtainable by the process as defined hereinbefore have an adhesion value GT of 0 as determined in accordance with DIN EN ISO 2409-2013 after 1 hour in water at 60°C.

In another even more preferred embodiment, inkjet printed polycarbonate substrates, being thermoformed and comprising a further hardcoat layer meet the following requirements:
- Optical density of the full coverage area of the printed black obscuration band (400-700 nm) ≤ 4,6 measured on a Perkin Elmer Lambda950 UV-VIS-NIR spectrophotometer, equipped with 150mm reflective sphere (Transmittance mode and sample with ink surface phased to incoming light beam. Additional settings: 1% attenuator in reference beam, 2 seconds integration time and detector in absorbance mode);
- No loss of adhesion (GT0 according to ISO 2409:2013) after 500 MJ/m² (3200 hours Xenon weathering in accordance with ISO 11341:2004);
- No visible changes or loss of optical properties of the ink after 500 MJ/m² (3200 hours Xenon weathering in accordance with ISO 11341:2004);
- No chemical attack (by window cleaning solution, undiluted denatured alcohol, petrol and reference kerosene, in accordance with UN ECE Regulation 43, Revision 4, *Uniform provisions concerning the approval of safety glazing materials and their installation on vehicles,* 3 April 2017, Annex 3, paragraph 11; 11.1-11.2.6.2.2);
- Passing headform test (in accordance with UN ECE Regulation 43, Revision 4, *Uniform provisions concerning the approval of safety glazing materials and their installation on vehicles,* 3 April 2017, Annex 3, paragraph 3; 3.2-3.2.6); and
- Passing 227 g ball drop test at -18 °C (in accordance with UN ECE Regulation 43, Revision 4, *Uniform provisions concerning the approval of safety glazing materials and their installation on vehicles,* 3 April 2017, Annex 3, paragraph 2; 2.1-2.2.4).

Thus, the invention has been described by reference to certain embodiments discussed above. It will be recognized that these embodiments are susceptible to various modifications and alternative forms well known to those of skill in the art.

All embodiments of the invention described hereinbefore can be combined, unless specified otherwise.

Furthermore, for a proper understanding of this document and its claims, it is to be understood that the verb 'to comprise' and its conjugations are used in its non-limiting sense to mean that items following the word are included, but items not specifically mentioned are not excluded.

In addition, reference to an element by the indefinite article 'a' or 'an' does not exclude the possibility that more than one of the element is present, unless the context clearly requires that there be one and only one of the elements. The indefinite article 'a' or 'an' thus usually means 'at least one'.

The invention is further illustrated by the following examples.

### EXAMPLES

### Comparative Example 1: inkjet printing on untreated polycarbonate

Inkjet printing tests on a polycarbonate substrate were performed using different black UV-curable inks. The polycarbonate substrate was chosen from Lexan ULG sheets (ULG1000-112, ULG1000 GY and ULG1003 112 from Sabic Innovative Plastics, Bergen op Zoom, the Netherlands Sabic) having thicknesses of between 3 and 6 mm and having A4 size (DIN).

The black UV-curable inks applied were Signtrade amethyst A50-UV-MPX, Swissqprint T-ink and Hapa Aposta UV DOD ink.

Signtrade amethyst A50-UV-MPX ink has been developed to provide high adhesion to a variety of rigid and flexible media and is described to be printable with a variety of printheads (Toshiba, Konica Minolta, Spectra and Ricoh) and with a variety of printers (Grapo, Cube, Durst, Jetrix, Rastek, Agfa, Jeti, Flora). Swissqprint T-ink is offered for printing on glass, metal and for thermoforming applications. Hapa Aposta UV DOD ink can be used with numerous print heads including those supplied by Konica Minolta, Xaar, and Kyocera.

The resulting prints were subjected to adhesion tests in accordance with DIN EN ISO 2409-2013 ('Gitterschnittprufung'). In this test the adhesion is tested, resulting in a GT value between 0 and 5. The lower the value, the better the adhesion. All tests resulted in prints with a GT-value between 1 and 5 meaning that adhesion was insufficient.

### Example 1: printing on pretreated polycarbonate (not according to the invention)

In a second experiment, a polycarbonate substrate was pretreated in 3 different ways. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to flame oxidation using a Bunsen burner with butane gas. This technique introduces carbon-oxygen bonds at the surface of the polycarbonate sheet that may enhance adhesion of ink to the substrate.

In a second pretreatment experiment, a surface of the polycarbonate substrate was treated with UV-curable Agfa Jeti primer, applied with inkjet and cured with UV-light. The Agfa Jeti primer comprises acrylates and a photoinitiator.

In a third pretreatment experiment, a first surface of the polycarbonate substrate was treated with a treating fluid as follows:
a) a treating fluid was prepared by stirring a mixture consisting of 10 wt% cyclohexanone and 90 wt% diacetone alcohol at a temperature of 21°C for 2 minutes;
b) the treating fluid of step (a) was applied to the first surface of the polycarbonate substrate by spraying in an amount of 100 g/m² at a temperature of 21°C. Thus, 10 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was placed in a hot air circulating oven at a temperature of 50°C for 20 minutes to lower the treating fluid content to 0.25 wt%, based on the weight of the treated polycarbonate substrate.

This pretreatment resulted in a polycarbonate substrate without visual patterns, orange peel, haze and whitening on the first surface.

The pretreated polycarbonate substrates were subsequently printed on with different black Agfa Jeti Anuvia HDC UV-curable inks (Agfa Anuvia 250 Black ink is the UV-led version) with an Agfa Anapurna M2540iFB printer (KKKK configuration, equipped with either UV-leds or a UV H-bulb). Agfa Anuvia 250 Black ink had a viscosity of between about 24 and 25 mPa·s at a temperature of 23°C and a viscosity of between about 10 and 11 mPa·s at a temperature of 45°C, at shear rates between 20 and 700 1/s, as measured with a MCR301 rheometer from Anton Paar (SN80108634) with a cylindrical geometry (SN27423-43305). Agfa Anuvia 250 Black ink had a dynamic surface tension at a temperature of 23°C of about 34 mN/m at a surface age of 10 ms ranging to a (static) surface tension of about 24 mN/m at a surface age of 10 s, and a dynamic surface tension at a temperature of 45°C of about 30 mN/m at a surface age of 10 ms ranging to a (static) surface tension of 24 mN/m at a surface age of 10 s, as measured using a Krüss BP100 bubble pressure tensiometer (SN30001145). Agfa Jeti Anuvia HDC and Agfa Anuvia 250 Black ink comprise a photoinitiator, acrylates, among which is a crosslinker, and vinyl ether acrylate. See Table 1 for adhesion results.

**Table 1**

| **Test No.** | **Ink** | **Pretreatment** | **Adhesion according to DIN EN ISO 2409-2013 after 1 hour in water at 60°C** |
|---|---|---|---|
| 1 | Agfa Jeti Anuvia HDC | flame treatment | 5 |
| 2 | Agfa Anuvia 250 Black ink | flame treatment | 5 |
| 3 | Agfa Jeti Anuvia HDC | Agfa Jeti primer | 5 |
| 4 | Agfa Anuvia 250 Black ink | Agfa Jeti primer | Not tested |
| 5 | Agfa Jeti Anuvia HDC | treating fluid | 0 |
| 6 | Agfa Anuvia 250 Black ink | treating fluid | 0 |

As is evident from Table 1, only the prints made on the polycarbonate substrate pretreated with a treating fluid show good adhesion. Without wishing to be bound by any theory, it is believed that flame oxidation (Tests No 1 and 2) only results in additional Van der Waals bonds between ink and substrate. These Van der Waals bonds are lost if the print is submerged in water. Although initial adhesion of Test No 3 resulted in good adhesion, the adhesion completely disappeared after soaking the print in water of 60°C for 1 hour.

### Example 2: printing on pretreated polycarbonate (not according to the invention)

In a further experiment, a polycarbonate substrate was again pretreated in 3 different ways. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to flame oxidation using a Bunsen burner with butane gas. This technique introduces carbon-oxygen bonds at the surface of the polycarbonate sheet that may enhance adhesion of inks to the substrate.

In a second pretreatment experiment, a first surface of the polycarbonate substrate was treated with a treating fluid as follows:
a) a treating fluid consisting of 100 wt% cyclohexanone was provided;
b) the treating fluid of step (a) was applied to a first surface of the polycarbonate substrate by spraying in an amount of 70 g/m² at a temperature of 21°C. Thus, 70 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was placed in a hot air circulating oven at a temperature of 50°C for 30 minutes to lower the treating fluid content to 0.32 wt%, based on the weight of the treated polycarbonate substrate.

This pretreatment resulted in a polycarbonate substrate without visual patterns, orange peel, haze and whitening on the first surface.

The pretreated polycarbonate substrate was subsequently printed on with Mimaki LH 100 black UV-curable ink with an Mimaki Jfx500-2131 printer (KKKK configuration, equipped with UV-leds). The printed ink was cured with UV-radiation. Mimaki LH 100 black ink comprises acryl acid ester, 1,6-hexanediol diacrylate and photoinitiator. See Table 2 for adhesion results.

Mimaki LH 100 black ink showed Newtonian behavior, had a viscosity of between 23 and 24 mPa·s at a temperature of 23°C and a viscosity of about 10 mPa·s at a temperature of 45°C, at shear rates between 20 and 700 1/s, as measured with a MCR301 rheometer from Anton Paar (SN80108634) with a cylindrical geometry (SN27423-43305). Mimaki LH 100 black ink had a dynamic surface tension at a temperature of 23°C of about 43 mN/m at a surface age of 10 ms ranging to a (static) surface tension of about 38 mN/m at a surface age of 10 s, and a dynamic surface tension at a temperature of 45°C of about 40 mN/m at a surface age of 10 ms ranging to a (static) surface tension of 36.5 mN/m at a surface age of 10 s, as measured using a Krüss BP100 bubble pressure tensiometer (SN30001145).

**Table 2**

| **Test No.** | **Ink** | **Pretreatment** | **Adhesion according to DIN EN ISO 2409-2013 after 1 hour in water at 60°C** |
|---|---|---|---|
| 7 | Mimaki LH 100 | flame treatment | 5 |
| 8 | Mimaki LH 100 | treating fluid | 0 |

As is evident from Table 1, only the prints made on polycarbonate substrate pretreated with a treating fluid have good adhesion.

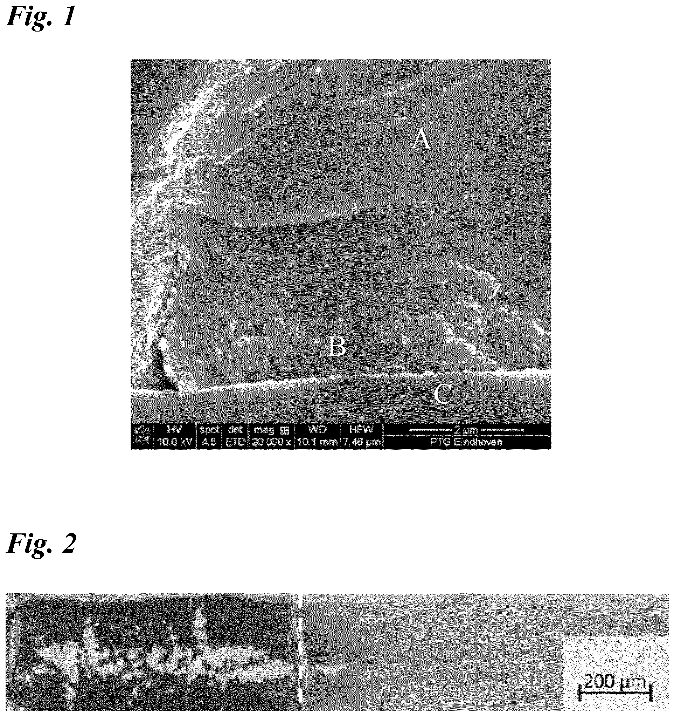

A microscopic analysis of the interface between the polycarbonate substrate and the cured Mimaki LH 100 ink showed an intermediate layer (a layer with a somewhat more grainy texture) wherein polycarbonate substrate and ink are interlocked (see Figure 1). 'A' refers to 'cured UV-curable ink, 'B' to 'intermediate layer' and 'C' to 'polycarbonate layer'.

### Comparative Example 2

In a further comparative example a polycarbonate substrate (Lexan ULG1003 sheet from Sabic Innovative Plastics, Bergen op Zoom, the Netherlands, having a thickness of 3 mm and having A4 size (DIN)) was pretreated as in Example 2. Drying step (d) was however performed until the content of the treating fluid reached about 0 wt%, based on the weight of the treated polycarbonate substrate. It was observed that the treated polycarbonate surface returned to the *'closed'* non-swollen state when all of said treating fluid was removed from the treated polycarbonate substrate. Subsequent inkjet printing in accordance with Example 2 on the treated polycarbonate surface resulted in very poor adhesion according to DIN EN ISO 2409-2013 after 1 hour in water at 60°C (GT value of 5).

### Comparative Example 3

In a still further comparative example a polycarbonate substrate (Lexan ULG1003 sheet from Sabic Innovative Plastics, Bergen op Zoom, the Netherlands, having a thickness of 3 mm and having A4 size (DIN)) was pretreated as in Example 2. No drying step (d) was however performed such that the content of the treating fluid before printing was about 1.9 wt%, based on the weight of the treated polycarbonate substrate. Subsequent inkjet printing in accordance with Example 2 on the treated polycarbonate surface resulted in very poor adhesion according to DIN EN ISO 2409-2013 after 1 hour in water at 60°C (GT value of 5).

### Example 3: printing of conductive patterns on pretreated polycarbonate (not according to the invention)

In a fourth experiment, a polycarbonate substrate was pretreated in 4 different ways. Polycarbonate without pretreatment was used as a reference. The polycarbonate substrate was a Lexan ULG1003 sheet (from Sabic Innovative Plastics, Bergen op Zoom, the Netherlands) having a thickness of 3 mm and having A4 size (DIN).

In a first pretreatment experiment, a first surface of the polycarbonate substrate was subjected to plasma treatment. This technique may enhance adhesion of inks to the substrate.

In a second pretreatment experiment, a first surface of the polycarbonate substrate was subjected to UV-radiation using radiation from a UV H-bulb for 70 seconds. This technique may enhance adhesion of inks to the substrate.

In a third pretreatment experiment, a first surface of the polycarbonate substrate was treated with a treating fluid as follows:
a) a treating fluid consisting of 100 wt% cyclohexanone was provided;
b) the treating fluid of step (a) was applied to the first surface of the polycarbonate substrate by spraying in an amount of 50 g/m² at a temperature of 21°C. Thus, 50 g/m² of cyclohexanone was applied to the first surface of the polycarbonate substrate. The cyclohexanone was allowed to impregnate the first surface of the polycarbonate substrate for 3 minutes;
c) directly following step (b), the treated surface was rinsed 4 times with diacetone alcohol to remove an excess of cyclohexanone;
d) the polycarbonate substrate with the rinsed surface obtained in step (c) was dried under ambient conditions for a period of 12 hours to remove substantially all the diacetone alcohol and to lower the cyclohexanone content to 0.36 wt%, based on the weight of the treated polycarbonate substrate.

This pretreatment resulted in a polycarbonate substrate without visual patterns, orange peel, haze and whitening on the first surface.

In a fourth pretreatment experiment, a first surface of the polycarbonate substrate was subjected to the plasma treatment of the first experiment and subsequently to the treating fluid of the third pretreatment experiment.

The pretreated polycarbonate substrates were subsequently printed on with different radiation-curable conductive inks; Dupont PE410 and Agfa SI J20X.

Dupont PE410 is an ink-jet silver conductor ink having a viscosity of 12-18 mPa·s at 25°C and a shear rate of 1000 1/s, measured with Bohlin, cone and plate 1°, 40 mm, and a static surface tension of 20-40 mN/m at 25°C. After printing the ink onto the (pretreated) polycarbonate substrates with a Pixdro LP50 printer from Meyer Burger with Konica Minolta printheads, a post-treatment with infrared radiation (to a temperature of 120°C) for a period of 60 minutes was performed to dry the ink an sinter the silver particles.

Agfa Orgacon SI-J20X is an ink-jet nanoparticle silver conductor ink having a viscosity of 12-18 mPa s at 25°C and a shear rate of 1000 1/s and a static surface tension of 39-42 mN/m ate 25°C. After printing the ink onto the pretreated polycarbonate substrates with a Pixdro LP50 printer from Meyer Burger with Kinica Minolta printheads, a post-treatment with infrared radiation (to a temperature of 120°C) was performed to dry the ink an sinter the silver nanoparticles. Results are given in Table 3:

**Table 3**

| **Test No.** | **Ink** | **Pretreatment** | **Result** |
|---|---|---|---|
| 9 | Agfa Orgacon SI-J20X | no pretreatment | Cracks after drying/sintering |
| 10 | Agfa Orgacon SI-J20X | plasma | Cracks after drying/sintering |
| 11 | Agfa Orgacon SI-J20X | UV | Cracks after drying/sintering |
| 12 | Agfa Orgacon SI-J20X | treating fluid | No cracks |
| 13 | Agfa Orgacon SI-J20X | treating fluid +plasma | No cracks |
| 14 | Dupont PE410 | no pretreatment | Cracks after drying/sintering |
| 15 | Dupont PE410 | plasma | Cracks after drying/sintering |
| 16 | Dupont PE410 | UV | Cracks after drying/sintering |
| 17 | Dupont PE410 | treating fluid | No cracks |
| 18 | Dupont PE410 | treating fluid +plasma | No cracks |

The samples pretreated with both plasma and the treating fluid provided the best adhesion and electrical conductivity of the printed layers (the least cracks in the dried/sintered layer). Drying and sintering of polycarbonate prints without pretreatment or pretreated without the treating fluid showed a substantial number of cracks leading to a substantial decrease in electrical conductivity. The electrical conductivity of the printed polycarbonate pretreated with treating fluid was tenfold higher than the electrical conductivity of the printed polycarbonate that was not pretreated at all. See Figure 2 for the difference in visual appearance between printed polycarbonate pretreated with treating fluid (right-hand side of dotted line) and printed polycarbonate that was not pretreated at all (left-hand side of dotted line) on a single sheet of polycarbonate.

### Example 4: diluent screening

Diluents for use in the treating fluid were screened. Appropriate diluents should have no adverse effect on the visual appearance and mechanical properties of polycarbonate, should readily evaporate and should be fully miscible with the one or more cyclic ketones being liquid at a temperature between 15 and 35°C, in particular with cyclohexanone.

The polycarbonate substrate was chosen from Lexan ULG1003 112 (from Sabic Innovative Plastics, Bergen op Zoom, the Netherlands) having a thickness of 3 mm and having A4 size (DIN).

The following potential diluents came out of a first screening test: diacetone alcohol, isopropyl alcohol, *n*-hexane, *n*-heptane and *n*-octane.

The potential diluents (100 wt% diluent) were flow-coated onto a single surface of individual polycarbonate substrates using a Nordson Flow-Through-Felt primer dispensing system, resulting in a diluent film layer applied in an amount of between 1 and 2 g/m², based on the treated surface area of the polycarbonate substrate.

None of the potential diluents had an adverse effect on the visual appearance and mechanical properties of the polycarbonate substrate.

In a second screening test, potential treating fluids consisting of mixtures of 2.5 wt% diluent / 97.5 wt% cyclohexanone, 5 wt% diluent / 95 wt% cyclohexanone, and 10 wt% diluent / 90 wt% cyclohexanone were prepared and were flow coated onto a single surface of individual polycarbonate substrates using a Nordson Flow-Through-Felt primer dispensing system, resulting in a treating fluid film layer applied in an amount of between 1 and 2 g/m², based on the treated surface area of the polycarbonate substrate.

It was observed that treating fluids comprising mixtures of cyclohexanone and isopropyl alcohol result in unacceptable visual defects after flow coating. More in particular, orange peel was observed. The treated polycarbonate substrates were left to dry under ambient conditions. It was observed that the diacetone alcohol/cyclohexanone treating fluids were dry within about 10 minutes, the n-octane/cyclohexanone treating fluids were dry within 2 minutes, the *n-*heptane/cyclohexanone treating fluids were dry within 1 minute, and the *n-*octane/cyclohexanone treating fluids were dry within 30 seconds. Of the treating fluids tested, mixtures with n-hexane, n-heptane and n-octane gave excellent visual appearance and mechanical properties. Diacetone alcohol also gave good visual appearance and mechanical properties but evaporated rather slowly.

It was concluded that diacetone alcohol, n-hexane, n-heptane and n-octane can be applied as diluent in the treating fluids in the process according to the invention, n-heptane being the most preferred.

### Example 5: manufacture of vehicle glazing by printing on pretreated polycarbonate

### Example 5a: pretreating polycarbonate substrate with different treating fluids

The polycarbonate substrate was chosen from Lexan ULG1003 112 (from Sabic Innovative Plastics, Bergen op Zoom, the Netherlands) having a thickness of 3 mm and having A4 size (DIN). Similar experiments (for real prototypes for vehicle glazing) were performed starting from Lexan ULG1003 112 (from Sabic Innovative Plastics, Bergen op Zoom, the Netherlands) having a thickness of 6 mm and having a size of 150 cm x 250 cm. Results obtained were similar (not reported here).

Part of a single surface of individual polycarbonate substrates was treated with the following treating fluids A to D:
A) 97.5 wt% diacetone alcohol (DAA) + 2.5 wt% cyclohexanone;
B) 97.5 wt% n-heptane + 2.5 wt% cyclohexanone;
C) 95 wt% n-heptane + 5 wt% cyclohexanone; and
D) 90 wt% n-heptane + 10 wt% cyclohexanone.

The part of the single surface that was treated with treating fluid corresponded to the surface that was to be printed on (about 20 % of the surface area of the single surface), with the proviso that the treated area was slightly larger than the area that was to be printed on. See Figure 3 for the pattern to be printed onto the single surface, said pattern comprising matrix dots and areas with full coverage. As will be apparent from Figure 3, part of the single surface of the polycarbonate substrate was not treated with treating fluid, part was treated with treating fluid and subsequently printed on and part was treated with treating fluid without being subsequently printed on (in particular the area between the matrix dots).

The treating fluids A to D were flow coated onto part of the single surface of individual polycarbonate substrates using a Nordson Flow-Through-Felt primer dispensing system, resulting in an amount of between 1 and 2 g/m² of treating fluid based on the treated surface area.

After applying the treating fluids, the treated polycarbonate substrates were left to dry at room temperature. After drying the weight percentage of the treating fluid on and in the treated polycarbonate substrate was between 1 ppm and 1 wt%, based on the weight of the treated polycarbonate substrate. After drying, no physical layer of treating fluid could be observed anymore. Moreover, after drying, the surface area treated with treating liquid and the surface area that had not been treated had the same visual appearance (*e.g*. transparency). The treating fluid 'only' activated the surface of the polycarbonate substrate.

### Example 5b: printing on pretreated polycarbonate

After drying, a black obscuration band with matrix dots, typical for vehicle glazing, was printed onto the treated surface of the polycarbonate substrates (see Figure 3 for the printed pattern). The ink used was black Agfa Jeti Anuvia HDC UV-curable ink. This UV-curable ink has the following composition, wherein the weight percentages are based on the weight of the UV-curable ink:
- between 20 and 30 wt% 2-(2-vinyloxyethoxy) ethyl acrylate;
- between 10 and 20 wt% oxybis(methyl-2,1-ethanediyl) diacrylate;
- between 10 and 20 wt% 4-(1,1-dimethylethyl)cyclohexyl acrylate;
- between 5 and 10 wt% butylcarbamate monomer;
- between 1 and 5 wt% 2-methyl-1-(4-methylthiophenyl)-2-morpholinopropan-1-one;
- between 1 and 5 wt% carbon black (carbon);
- between 10 and 20 wt% ethoxylated trimethylolpropane triacrylate;
- between 1 and 5 wt% 2-isopropyl-9H-thioxanthen-9-one;
- between 1 and 5 wt% pigment;
- between 1 and 5 wt% ethyl-4-dimethylaminobenzoate; and
- between 1 and 5 wt% 2-benzyl-2-dimethylamino-4-morpholinobutyrophenone.

The viscosity and dynamic surface tension of Agfa Jeti Anuvia HDC UV-curable ink were similar to those of Agfa Anuvia 250 Black ink as described in Example 1.

An Agfa Anapurna M2540iFB inkjet printer equipped with a mercury UV bulb (H-bulb) was used to deposit and cure the ink onto the polycarbonate substrates. The settings of the printer were as follows: 720x1440 dpi, quality 8 pass, RIP: wasatch version 6.9, ink limit = 400% (no output profile), bi-directional, UV mode both, UV 10, double strike.

### Example 5c: thermoforming

The polycarbonate substrates with the printed and cured pattern thereon were let to dry at ambient conditions for 1 day. Subsequently, the polycarbonate substrates were thermoformed by drape forming using a mould in a hot air circulating oven at a temperature of 160 °C for 30 minutes. A radius of 75 mm was applied to the sample. After cooling to 60°C, the thermoformed polycarbonate substrates were removed from the oven.

### Example 5d: applying a further coating layer

After thermoforming, the whole single surface of the polycarbonate, *i.e.* the part that was treated with treating fluid and subsequently printed on, the part that was treated with treating fluid without being printed on and the part that was not treated with treating fluid, were flow coated with a hardcoat system AS4000^{™}/SHP401 from Momentive Peformance Materials. AS4000 is the actual hardcoat precursor comprising a siloxanol resin/colloidal silica dispersion. SHP401 is a primer, which is a solution of an acrylic polymer. SHP401 was first coated onto the whole single surface of the polycarbonate and air dried to obtain a ~0.5 µm thick film. The AS4000 topcoat, ~5 µm thick film, was subsequently applied over the primer layer and air dried before curing at 160°C for 30 minutes. The curing step involves the condensation of residual silanols to form siloxane bonds. See Figure 4 for a close-up of a typical product obtained in Example 5d (without thermoforming).

This AS4000^{™}/SHP401 hardcoat system is a coating system compliant with UN ECE Regulation 43, Revision 4, *Uniform provisions concerning the approval of safety glazing materials and their installation on vehicles,* 3 April 2017, and is typically used as a coating for glazing parts, *e.g*. vehicle glazing.

It was observed that the printed pattern (the cured inkjet printed dots of the Agfa Jeti Anuvia HDC UV-curable ink) were repellent for the AS4000^{™}/SHP401 hardcoat system. This means that during flow coating the hardcoat system was `pushed off from the cured inkjet printed dots of the Agfa Jeti Anuvia HDC UV-curable ink. Flow coating with the AS4000^{™}/SHP401 hardcoat system resulted, however, in good wetting of the polycarbonate substrate that was treated with treating fluid and of the polycarbonate substrate that was not treated with treating fluid.

The repellent behaviour of the AS4000^{™}/SHP401 hardcoat system on the cured inkjet printed dots of the Agfa Jeti Anuvia HDC UV-curable ink and the wetting of the polycarbonate substrate in between is advantageous because it prevents the formation of flow lines or other visual defects during flow coating of the printed surface.

### Example 5e: quality assessment

The polycarbonate substrates printed on, being thermoformed and comprising a further hardcoat layer were subsequently subjected to different tests, such as those highlighted in UN ECE Regulation 43, Revision 4, *Uniform provisions concerning the approval of safety glazing materials and their installation on vehicles,* 3 April 2017. More in particular, it was analyzed whether the polycarbonate substrates printed on, being thermoformed and comprising a further hardcoat layer met the following requirements:
- Optical density of the full coverage area of the printed black obscuration band (400-700 nm) ≤ 4,6 measured on a Perkin Elmer Lambda950 UV-VIS-NIR spectrophotometer, equipped with 150mm reflective sphere (Transmittance mode and sample with ink surface phased to incoming light beam. Additional settings: 1% attenuator in reference beam, 2 seconds integration time and detector in absorbance mode);
- No flow lines or disruption of coating flow path during flow coating operation;
- No loss of adhesion (GT0 according to ISO 2409:2013) after 500 MJ/m² (3200 hours Xenon weathering in accordance with ISO 11341:2004);
- No visible changes or loss of optical properties of the ink after 500 MJ/m² (3200 hours Xenon weathering in accordance with ISO 11341:2004);
- No chemical attack (by window cleaning solution, undiluted denatured alcohol, petrol and reference kerosene, in accordance with UN ECE Regulation 43, Revision 4, *Uniform provisions concerning the approval of safety glazing materials and their installation on vehicles,* 3 April 2017, Annex 3, paragraph 11; 11.1-11.2.6.2.2);
- Passing headform test (in accordance with UN ECE Regulation 43, Revision 4, *Uniform provisions concerning the approval of safety glazing materials and their installation on vehicles,* 3 April 2017, Annex 3, paragraph 3; 3.2-3.2.6); and
- Passing 227 g ball drop test at -18 °C (in accordance with UN ECE Regulation 43, Revision 4, *Uniform provisions concerning the approval of safety glazing materials and their installation on vehicles,* 3 April 2017, Annex 3, paragraph 2; 2.1-2.2.4).

Both the non-printed and the printed polycarbonate surface were analysed.

Results are presented in Table 4.

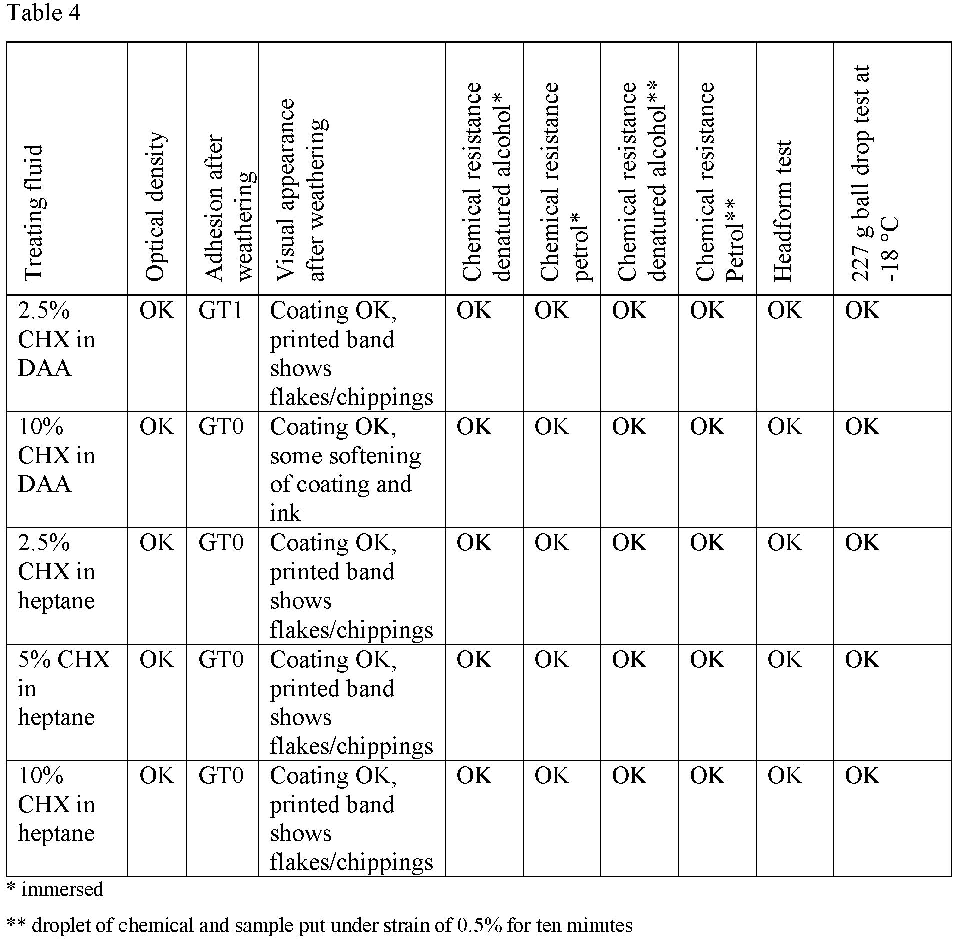

As indicated in Table 4, good results could be obtained with the different treating fluids. Nevertheless, the visual appearance test after weathering resulted in flakes or chippings in the full coverage area of the printed obscuration band. Although the cured inkjet printed dots of the Agfa Jeti Anuvia HDC UV-curable ink repel the AS400O^{™}/SUP401 hardcoat system, analysis with infrared spectroscopy (ThermoFischer Nicolet Summit PRO ATR) revealed that traces of the hardcoat system were left on (*i.e* in the valleys of) the full coverage area of the printed obscuration band (not in the matrix dot area). The inventors have established that the traces of the hardcoat system that were left on the full coverage area of the printed obscuration band could be easily removed by wiping with methoxy 2-propanol (a solvent already present in primer SHP401 of the hardcoat system) before drying and curing of the hardcoat system. Removing the traces of the hardcoat system that were left on the full coverage area of the printed obscuration band by wiping with methoxy-2-propanol before drying and curing of the hardcoat system resulted in improved visual appearance after the weathering test (no formation of flakes/chippings).

## Claims

1. Method for printing radiation-curable ink onto a polycarbonate substrate, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of a diluent chosen from the group consisting of diacetone alcohol, *n*-hexane, *n-*heptane and *n*-octane;
c) treating at least part of at least the first surface of the polycarbonate substrate of step (a) with between 0.06 and 5 g/m², based on the treated area, of the treating fluid of step (b) for a period of at least 5 seconds, preferably at a temperature between 15 and 35°C, resulting in a treated polycarbonate substrate layer with swollen areas where the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with the diluent to remove an excess of the one or more cyclic ketones being liquid at a temperature between 15 and 35°C;
e) optionally drying the treated polycarbonate substrate layer obtained in step (c) or (d) to reduce the weight percentage of the combined amounts of the treating fluid on and in the treated polycarbonate substrate to between 1 ppm and 0.4 wt%, based on the weight of the treated polycarbonate substrate;
f) providing the treated polycarbonate substrate obtained in any one of steps (c) to (e) wherein the combined amounts of the treating fluid on and in the treated polycarbonate substrate is between 1 ppm and 0.4 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the at least first surface of the polycarbonate substrate;
i) optionally thermoforming the polycarbonate substrate with the cured ink thereon obtained in step (h); and
j) optionally applying a coating layer onto at least part of at least the first surface of the polycarbonate substrate with the cured ink thereon obtained in step (h) or onto the thermoformed polycarbonate substrate with the cured ink thereon obtained in step (i), followed by drying or curing the coating layer.

2. Method for printing radiation-curable ink onto a polycarbonate substrate according to claim 1, said method comprising the steps of:
a) providing a polycarbonate substrate in the form of a sheet or film having a thickness and having a first and a second surface;
b) providing a treating fluid being a homogeneous liquid at a temperature between 15 and 35°C, comprising between 1 and 10 wt% of one or more cyclic ketones being liquid at a temperature between 15 and 35°C, based on the weight of the homogeneous liquid phase, wherein the remainder of the treating fluid consists of diluent diacetone alcohol;
c) treating at least part of at least the first surface of the polycarbonate substrate of step (a) with between 0.06 and 5 g/m², based on the treated area, of the treating fluid of step (b) for a period of at least 5 seconds, preferably at a temperature between 15 and 35°C, resulting in a treated polycarbonate substrate layer with swollen areas where the at least first surface is treated with the treating fluid, wherein the one or more cyclic ketones being liquid at a temperature between 15 and 35°C are distributed across at least part of the thickness of the polycarbonate substrate;
d) optionally rinsing the at least first surface of the treated polycarbonate substrate layer obtained in step (c) with diluent diacetone alcohol to remove an excess of the one or more cyclic ketones being liquid at a temperature between 15 and 35°C;
e) optionally drying the treated polycarbonate substrate layer obtained in step (c) or (d) to reduce the weight percentage of the combined amounts of the treating fluid on and in the treated polycarbonate substrate to between 1 ppm and 0.4 wt%, based on the weight of the treated polycarbonate substrate;
f) providing the treated polycarbonate substrate obtained in any one of steps (c) to (e) wherein the combined amounts of the treating fluid on and in the treated polycarbonate substrate is between 1 ppm and 0.4 wt%, based on the weight of the treated polycarbonate substrate;
g) applying radiation-curable ink onto at least part of the swollen areas of the at least first surface of the treated polycarbonate substrate provided in step (f) using inkjet printing;
h) curing the ink applied in step (g) such that the ink adheres to the surface of the at least first surface polycarbonate substrate;
i) optionally thermoforming the polycarbonate substrate with the cured ink thereon obtained in step (h); and
j) optionally applying a coating layer onto at least part of at least the first surface of the polycarbonate substrate with the cured ink thereon obtained in step (h) or onto the thermoformed polycarbonate substrate with the cured ink thereon obtained in step (i), followed by drying or curing the coating layer.

3. Method according to claim 1 or 2, wherein the one or more cyclic ketones being liquid at a temperature between 15 and 35°C are selected from the group consisting of unsubstituted cyclic ketones, cyclic ketones substituted with at least one alkyl group and mixtures thereof, more preferably, from the group consisting of cyclopentanone, 3,5,5-trimethyl-2-cyclohexen-1-one, 1-cyclohexylpropan-1-one, 1-cyclohexylethanone, cyclohexanone and mixtures thereof, wherein the cyclic ketone most preferably is cyclohexanone.

4. Method according to any one of claims 1 to 3, wherein the polycarbonate substrate of step (a) has a thickness of between 0.1 and 0.5 mm, and wherein only those parts of the at least first surface of the polycarbonate substrate of step (a) that are printed on in step (g) are treated with the treating fluid of step (b) in step (c), preferably using inkjet printing, using a flow-through-felt dispensing system or using a spray dispensing system, in an amount of between 0.06 and 4 g/m², based on the treated area.

5. Method according to any one of claims 1 to 4, wherein step (e) is mandatory, wherein preferably steps (d) and (e) are mandatory, and wherein the drying of the treated polycarbonate substrate in step (e) is performed in a hot air circulating oven, preferably at a temperature of between 35 and 120°C, or wherein the drying of the treated polycarbonate substrate in step (e) is performed by evaporation under ambient conditions.

6. Method according to any one of claims 1 to 5, wherein the amount of the treating fluid on and/or in the treated polycarbonate substrate obtained in step (e) and provided in step (f) is between 1 ppm and 0.3 wt%, more preferably between 1 ppm and 0.2 wt%, based on the weight of the treated polycarbonate substrate.

7. Method according to any one of claims 1 and 3 to 6, wherein the diluent is chosen from the group consisting of *n*-hexane, *n*-heptane and *n*-octane, wherein the diluent preferably is *n*-heptane.

8. Method according to any one of claims 1 to 7, wherein the radiation-curable ink applied in step (g) is a UV-curable ink and curing in step (h) encompasses applying UV-radiation or EB-radiation to the ink layer.

9. Method according to any one of claims 1 to 8, wherein:
(a) the radiation-curable ink comprises metal nanoparticles dispersed therein to provide conductive tracks on the treated polycarbonate substrate; or
(b) the radiation-curable ink comprises molecularly dissolved metal-precursor or dispersed metal-precursor nanoparticles to provide conductive tracks on the treated polycarbonate substrate.

10. Method according to claim 9, wherein the metal nanoparticles are sintered in or after step (g) and prior to step (j), wherein the metal-precursor is preferably converted to the corresponding metal after step (g) followed by sintering the metal, prior to step (j).

11. Method according to any one of claims 1 - 10, wherein step (i) is performed, and wherein thermoforming is performed at a temperature between 135 and 225 °C.

12. Method according to claim 11, wherein thermoforming is drape forming, preferably drape forming performed at a temperature between 135 and 165 °C for a period of between 5 and 60 minutes, more preferably at a temperature between 140 and 160 °C for a period of between 20 and 40 minutes.

13. Method according to any one of claims 1 - 12, wherein step (j) is performed, and wherein the coating layer is applied using flow, dip or spray coating, preferably flow coating, wherein drying or curing the coating layer is preferably performed at a temperature of between 120 and 140°C for a period between 30 and 60 minutes.

14. Method according to claim 13, wherein the coating layer applied in step (j) is a hardcoat system, preferably a hardcoat system meeting the following requirements:
• no chemical attack (by window cleaning solution, undiluted denatured alcohol, petrol and reference kerosene, in accordance with UN ECE Regulation 43, Revision *4, Uniform provisions concerning the approval of safety glazing materials and their installation on vehicles,* 3 April 2017, Annex 3, paragraph 11; 11.1-11.2.6.2.2);
• passing headform test (in accordance with UN ECE Regulation 43, Revision 4, *Uniform provisions concerning the approval of safety glazing materials and their installation on vehicles,* 3 April 2017, Annex 3, paragraph 3; 3.2-3.2.6); and
• passing 227 g ball drop test at -18 °C (in accordance with UN ECE Regulation 43, Revision 4, *Uniform provisions concerning the approval of safety glazing materials and their installation on vehicles,* 3 April 2017, Annex 3, paragraph 2; 2.1-2.2.4).

15. Inkjet printed polycarbonate substrate obtainable by the method according to any one of claims 1 to 14, wherein the inkjet printed polycarbonate substrate preferably is a product chosen form decorated and/or heatable windows or windscreens, in-mould electronics, printed antennas, printed RFID-tags, printed capacitive switches, printed capacitive light guides, and printed chip ID cards.

## Patentansprüche

1. Verfahren zum Drucken strahlungshärtbarer Tinte auf ein Polykarbonatsubstrat, wobei das besagte Verfahren die folgenden Schritte umfasst:
a) Bereitstellen eines Polykarbonatsubstrats in Form eines Blattes oder einer Folie mit einer Dicke und mit einer ersten und einer zweiten Oberfläche;
b) Bereitstellen eines Behandlungsfluids, das eine homogene Flüssigkeit bei einer Temperatur zwischen 15 und 35 °C ist und zwischen 1 und 10 Gew.-% eines oder mehrerer zyklischer Ketone umfasst, die bei einer Temperatur zwischen 15 und 35 °C, bezogen auf das Gewicht der homogenen flüssigen Phase, flüssig ist, wobei der Rest des Behandlungsfluids aus einem Verdünnungsmittel besteht, das aus der Gruppe ausgewählt ist, die aus Diacetonalkohol, n-Hexan, n-Heptan und n-Oktan besteht;
c) Behandeln mindestens eines Teils von mindestens der ersten Oberfläche des Polykarbonatsubstrats aus Schritt (a) mit zwischen 0,06 und 5 g/m², bezogen auf den behandelten Bereich, des Behandlungsfluids aus Schritt (b) für einen Zeitraum von mindestens 5 Sekunden, vorzugsweise bei einer Temperatur zwischen 15 und 35 °C, was zu einer behandelten Polykarbonatsubstratschicht mit geschwollenen Bereichen führt, in denen die mindestens erste Oberfläche mit dem Behandlungsfluid behandelt wird, wobei das eine oder die mehreren zyklischen Ketone, die bei einer Temperatur zwischen 15 und 35 °C flüssig sind, über mindestens einen Teil der Dicke des Polykarbonatsubstrats verteilt sind;
d) gegebenenfalls Spülen der mindestens ersten Oberfläche der in Schritt (c) erhaltenen behandelten Polykarbonatsubstratschicht mit dem Verdünnungsmittel, um einen Überschuss des einen oder der mehreren zyklischen Ketone zu entfernen, die bei einer Temperatur zwischen 15 und 35 °C flüssig sind;
e) gegebenenfalls Trocknen der in Schritt (c) oder (d) erhaltenen behandelten Polykarbonatsubstratschicht, um den Gewichtsprozentsatz der kombinierten Mengen des Behandlungsfluids auf und in dem behandelten Polykarbonatsubstrat auf zwischen 1 ppm und 0,4 Gew.- %, bezogen auf das Gewicht des behandelten Polykarbonatsubstrats, zu reduzieren;
f) Bereitstellen des in einem der Schritte (c) bis (e) erhaltenen behandelten Polykarbonatsubstrats, wobei die kombinierten Mengen des Behandlungsfluids auf und in dem behandelten Polykarbonatsubstrat zwischen 1 ppm und 0,4 Gew.-%, bezogen auf das Gewicht des behandelten Polykarbonatsubstrats, liegen;
g) Aufbringen von strahlungshärtbarer Tinte auf mindestens einen Teil der geschwollenen Bereiche der mindestens ersten Oberfläche des in Schritt (f) bereitgestellten behandelten Polykarbonatsubstrats unter Verwenden von Tintenstrahldruck;
h) Aushärten der in Schritt (g) aufgebrachten Tinte, so dass die Tinte an der Oberfläche der mindestens ersten Oberfläche des Polykarbonatsubstrats haftet;
i) gegebenenfalls Thermoformen des Polykarbonatsubstrats mit der in Schritt (h) erhaltenen gehärteten Tinte darauf; und
j) gegebenenfalls Aufbringen einer Überzugsschicht auf mindestens einen Teil von mindestens der ersten Oberfläche des Polykarbonatsubstrats mit der in Schritt (h) erhaltenen gehärteten Tinte darauf oder auf das thermogeformte Polykarbonatsubstrat mit der in Schritt (i) erhaltenen gehärteten Tinte darauf, gefolgt vom Trocknen oder Aushärten der Überzugsschicht.

2. Verfahren zum Drucken strahlungshärtbarer Tinte auf ein Polykarbonatsubstrat nach Anspruch 1, wobei das besagte Verfahren die folgenden Schritte umfasst:
a) Bereitstellen eines Polykarbonatsubstrats in Form eines Blattes oder einer Folie mit einer Dicke und mit einer ersten und einer zweiten Oberfläche;
b) Bereitstellen eines Behandlungsfluids, das eine homogene Flüssigkeit bei einer Temperatur zwischen 15 und 35 °C ist und zwischen 1 und 10 Gew.-% eines oder mehrerer zyklischer Ketone umfasst, die bei einer Temperatur zwischen 15 und 35 °C, bezogen auf das Gewicht der homogenen flüssigen Phase, flüssig sind, wobei der Rest des Behandlungsfluids aus dem Verdünnungsmittel Diacetonalkohol besteht;
c) Behandeln mindestens eines Teils von mindestens der ersten Oberfläche des Polykarbonatsubstrats aus Schritt (a) mit zwischen 0,06 und 5 g/m², bezogen auf den behandelten Bereich, des Behandlungsfluids aus Schritt (b) für einen Zeitraum von mindestens 5 Sekunden, vorzugsweise bei einer Temperatur zwischen 15 und 35 °C, was zu einer behandelten Polykarbonatsubstratschicht mit geschwollenen Bereichen führt, in denen die mindestens erste Oberfläche mit dem Behandlungsfluid behandelt wird, wobei das eine oder die mehreren zyklischen Ketone, die bei einer Temperatur zwischen 15 und 35 °C flüssig sind, über mindestens einen Teil der Dicke des Polykarbonatsubstrats verteilt sind;
d) gegebenenfalls Spülen der mindestens ersten Oberfläche der in Schritt (c) erhaltenen behandelten Polykarbonatsubstratschicht mit dem Verdünnungsmittel Diacetonalkohol, um einen Überschuss des einen oder der mehreren zyklischen Ketone zu entfernen, die bei einer Temperatur zwischen 15 und 35 °C flüssig sind;
e) gegebenenfalls Trocknen der in Schritt (c) oder (d) erhaltenen behandelten Polykarbonatsubstratschicht, um den Gewichtsprozentsatz der kombinierten Mengen des Behandlungsfluids auf und in dem behandelten Polykarbonatsubstrat auf zwischen 1 ppm und 0,4 Gew.- %, bezogen auf das Gewicht des behandelten Polykarbonatsubstrats, zu reduzieren;
f) Bereitstellen des in einem der Schritte (c) bis (e) erhaltenen behandelten Polykarbonatsubstrats, wobei die kombinierten Mengen des Behandlungsfluids auf und in dem behandelten Polykarbonatsubstrat zwischen 1 ppm und 0,4 Gew.-%, bezogen auf das Gewicht des behandelten Polykarbonatsubstrats, liegen;
g) Aufbringen von strahlungshärtbarer Tinte auf mindestens einen Teil der geschwollenen Bereiche der mindestens ersten Oberfläche des in Schritt (f) bereitgestellten behandelten Polykarbonatsubstrats unter Verwenden von Tintenstrahldruck;
h) Aushärten der in Schritt (g) aufgebrachten Tinte, so dass die Tinte an der Oberfläche der mindestens ersten Oberfläche des Polykarbonatsubstrats haftet;
i) gegebenenfalls Thermoformen des Polykarbonatsubstrats mit der in Schritt (h) erhaltenen gehärteten Tinte darauf; und
j) gegebenenfalls Aufbringen einer Überzugsschicht auf mindestens einen Teil von mindestens der ersten Oberfläche des Polykarbonatsubstrats mit der in Schritt (h) erhaltenen gehärteten Tinte darauf oder auf das thermogeformte Polykarbonatsubstrat mit der in Schritt (i) erhaltenen gehärteten Tinte darauf, gefolgt vom Trocknen oder Aushärten der Überzugsschicht.

3. Verfahren nach Anspruch 1 oder 2, wobei das eine oder die mehreren zyklischen Ketone, die bei einer Temperatur zwischen 15 und 35 °C flüssig sind, aus der Gruppe ausgewählt sind, die aus unsubstituierten zyklischen Ketonen, zyklischen Ketonen, die mit mindestens einer Alkylgruppe und Mischungen davon substituiert sind, besteht, besonders bevorzugt aus der Gruppe, die aus Cyclopentanon, 3,5,5-Trimethyl-2-cyclohexen-1-on, 1-Cyclohexylpropan-1-on, 1-Cyclohexylethanon, Cyclohexanon und Mischungen davon besteht, wobei das zyklische Keton am bevorzugtesten Cyclohexanon ist.

4. Verfahren nach einem der Ansprüche 1 bis 3, wobei das Polykarbonatsubstrat aus Schritt (a) eine Dicke zwischen 0,1 und 0,5 mm aufweist und wobei in Schritt (c) nur die in Schritt (g) bedruckten Teile der mindestens ersten Oberfläche des Polykarbonatsubstrats aus Schritt (a) mit dem Behandlungsfluid aus Schritt (b) behandelt werden, vorzugsweise unter Verwenden von Tintenstrahldruck, unter Verwenden eines Durchflussfilz-Dosiersystems oder unter Verwenden eines Sprüh-Dosiersystems, in einer Menge zwischen 0,06 und 4 g/m², bezogen auf den behandelten Bereich.

5. Verfahren nach einem der Ansprüche 1 bis 4, wobei Schritt (e) obligatorisch ist, wobei vorzugsweise die Schritte (d) und (e) obligatorisch sind, und wobei das Trocknen des behandelten Polykarbonatsubstrats in Schritt (e) in einem Heißluftumwälzofen ausgeführt wird, vorzugsweise bei einer Temperatur zwischen 35 und 120 °C, oder wobei das Trocknen des behandelten Polykarbonatsubstrats in Schritt (e) durch Verdampfung unter Umgebungsbedingungen ausgeführt wird.

6. Verfahren nach einem der Ansprüche 1 bis 5, wobei die Menge des Behandlungsfluids auf und/oder in dem in Schritt (e) erhaltenen und in Schritt (f) bereitgestellten behandelten Polykarbonatsubstrat zwischen 1 ppm und 0,3 Gew.-% liegt, besonders bevorzugt zwischen 1 ppm und 0,2 Gew.-%, bezogen auf das Gewicht des behandelten Polykarbonatsubstrats.

7. Verfahren nach einem der Ansprüche 1 und 3 bis 6, wobei das Verdünnungsmittel aus der Gruppe ausgewählt ist, die aus n-Hexan, n-Heptan und n-Oktan besteht, wobei das Verdünnungsmittel vorzugsweise n-Heptan ist.

8. Verfahren nach einem der Ansprüche 1 bis 7, wobei die in Schritt (g) aufgebrachte strahlungshärtbare Tinte eine UV-härtbare Tinte ist und das Aushärten in Schritt (h) das Anwenden von UV-Strahlung oder EB-Strahlung auf die Tintenschicht umfasst.

9. Verfahren nach einem der Ansprüche 1 bis 8, wobei:
(a) die strahlungshärtbare Tinte darin dispergierte Metallnanopartikel umfasst, um leitfähige Bahnen auf dem behandelten Polykarbonatsubstrat bereitzustellen; oder
(b) die strahlungshärtbare Tinte molekular aufgelöste Metallvorläufer- oder dispergierte Metallvorläufer-Nanopartikel umfasst, um leitfähige Bahnen auf dem behandelten Polykarbonatsubstrat bereitzustellen.

10. Verfahren nach Anspruch 9, wobei die Metallnanopartikel in oder nach Schritt (g) und vor Schritt (j) gesintert werden, wobei der Metallvorläufer vorzugsweise nach Schritt (g) in das entsprechende Metall umgewandelt wird, gefolgt vom Sintern des Metalls vor Schritt (j).

11. Verfahren nach einem der Ansprüche 1-10, wobei Schritt (i) ausgeführt wird und wobei das Thermoformen bei einer Temperatur zwischen 135 und 225 °C ausgeführt wird.

12. Verfahren nach Anspruch 11, wobei das Thermoformen ein Drapierformen ist, vorzugsweise ein Drapierformen, das bei einer Temperatur zwischen 135 und 165 °C für einen Zeitraum zwischen 5 und 60 Minuten ausgeführt wird, besonders bevorzugt bei einer Temperatur zwischen 140 und 160 °C für einen Zeitraum zwischen 20 und 40 Minuten.

13. Verfahren nach einem der Ansprüche 1 - 12, wobei Schritt (j) ausgeführt wird und wobei die Überzugsschicht unter Verwenden von Fließ-, Tauch- oder Sprühbeschichtung aufgebracht wird, vorzugsweise Fließbeschichtung, wobei das Trocknen oder Aushärten der Überzugsschicht vorzugsweise bei einer Temperatur zwischen 120 und 140 °C für einen Zeitraum zwischen 30 und 60 Minuten ausgeführt wird.

14. Verfahren nach Anspruch 13, wobei die in Schritt (j) aufgebrachte Überzugsschicht ein Hartbeschichtungssystem ist, vorzugsweise ein Hartbeschichtungssystem, das die folgenden Anforderungen erfüllt:
· kein chemischer Angriff (durch Fensterreinigungslösung, unverdünnten Brennspiritus, Benzin und Referenzkerosin, in Übereinstimmung mit der UN-ECE-Regelung 43, Revision 4, *Einheitliche Bedingungen für die Genehmigung der Sicherheitsverglasungswerkstoffe und ihres Einbaus in Fahrzeuge,* 3. April 2017, Anhang 3, Absatz 11; 11.1-11.2.6.2.2);
· Bestehen der Kopfformprüfung (in Übereinstimmung mit der UN-ECE-Regelung 43, Revision 4, *Einheitliche Bedingungen für die Genehmigung der Sicherheitsverglasungswerkstoffe und ihres Einbaus in Fahrzeuge,* 3. April 2017, Anhang 3, Absatz 3; Absatz 3; 3.2-3.2.6); und
· Bestehen des 227-g-Kugelfalltest bei -18 °C (in Übereinstimmung mit UN-ECE-Regelung 43, Revision 4, *Einheitliche Bedingungen für die Genehmigung der Sicherheitsverglasungswerkstoffe und ihres Einbaus in Fahrzeuge,* 3. April 2017, Anhang 3, Absatz 2; 2.1-2.2.4).

15. Tintenstrahlbedrucktes Polykarbonatsubstrat, das durch das Verfahren nach einem der Ansprüche 1 bis 14 erhältlich ist, wobei das tintenstrahlbedruckte Polykarbonatsubstrat vorzugsweise ein Produkt ist, das aus dekorierten und/oder beheizbaren Fenstern oder Windschutzscheiben, In-Mold-Elektronik, gedruckten Antennen, gedruckten RFID-Tags, gedruckten kapazitiven Schaltern, gedruckten kapazitiven Lichtleitern und gedruckten Chip-ID-Karten ausgewählt ist.

## Revendications

1. Procédé d'impression d'encre radiodurcissable sur un substrat en polycarbonate, ledit procédé comprenant les étapes de :
a) fournir un substrat en polycarbonate sous la forme d'une feuille ou film ayant une épaisseur et ayant une première et une deuxième surface ;
b) fournir un fluide de traitement étant un liquide homogène à une température entre 15 et 35 °C, comprenant entre 1 et 10 % en poids d'une ou plusieurs cétones cycliques liquides à une température entre 15 et 35 °C, sur la base du poids de l'étape liquide homogène, où le reste du fluide de traitement consiste en un diluant choisi du groupe consistant en alcool de diacétone, n-hexane, n-heptane et n-octane ;
c) traiter au moins une partie d'au moins la première surface du substrat en polycarbonate de l'étape (a) avec entre 0,06 et 5 g/m², sur la base de la zone traitée, du fluide de traitement de l'étape (b) pour une période d'au moins 5 secondes, de préférence à une température entre 15 et 35 °C, résultant en une couche de substrat en polycarbonate traité avec des zones enflées où l'au moins première surface est traitée avec le fluide de traitement, où l'une ou plusieurs cétones cycliques étant liquides à une température entre 15 et 35°C sont distribuées à travers au moins une partie de l'épaisseur du substrat en polycarbonate ;
d) rincer facultativement l'au moins première surface de la couche de substrat en polycarbonate traitée obtenue dans l'étape (c) avec le diluant pour éliminer un excès de l'une ou plusieurs cétones cycliques étant liquides à une température entre 15 et 35 °C ;
e) sécher facultativement la couche de substrat en polycarbonate traitée obtenue dans l'étape (c) ou (d) pour réduire le pourcentage en poids des quantités combinées du fluide de traitement sur et dans le substrat en polycarbonate traité entre 1 ppm et 0,4 % en poids, sur la base du poids du substrat en polycarbonate traité ;
f) fournir le substrat en polycarbonate traité obtenu dans l'une quelconque des étapes (c) à (e) où les quantités combinées du fluide de traitement sur et dans le substrat en polycarbonate traité est entre 1 ppm et 0,4 % en poids, sur la base du poids du substrat en polycarbonate traité ;
g) appliquer l'encre radiodurcissable sur au moins une partie des zones enflées de l'au moins première surface du substrat en polycarbonate traitée fournie dans l'étape (f) en utilisant l'impression à jet d'encre ;
h) durcir l'encre appliquée dans l'étape (g) de sorte que l'encre adhère à la surface de l'au moins première surface du substrat en polycarbonate ;
i) facultativement thermoformer le substrat en polycarbonate avec l'encre durcie dessus obtenue dans l'étape (h) ; et
j) appliquer facultativement une couche de revêtement sur au moins une partie d'au moins la première surface du substrat en polycarbonate avec l'encre durcie dessus obtenue dans l'étape (h) ou sur le substrat en polycarbonate thermoformé avec l'encre durcie dessus obtenue dans l'étape (i), suivie du séchage ou du durcissement de la couche de revêtement.

2. Procédé d'impression d'encre radiodurcissable sur un substrat en polycarbonate selon la revendication 1, ledit procédé comprenant les étapes de :
a) fournir un substrat de polycarbonate sous la forme d'une feuille ou film ayant une épaisseur et ayant une première et une deuxième surface ;
b) fournir un fluide de traitement étant un liquide homogène à une température entre 15 et 35 °C, comprenant entre 1 et 10 % en poids d'une ou plusieurs cétones cycliques étant liquides à une température entre 15 et 35 °C, sur la base du poids de l'étape liquide homogène, où le reste du fluide de traitement consiste en alcool de diacétone diluant ;
c) traiter au moins une partie d'au moins la première surface du substrat en polycarbonate de l'étape (a) avec entre 0,06 et 5 g/m², en fonction de la zone traitée, du fluide de traitement de l'étape (b) pendant une période d'au moins 5 secondes, de préférence à une température entre 15 et 35 °C, résultant en une couche de substrat de polycarbonate traitée avec des zones enflées où l'au moins première surface est traitée avec le fluide de traitement, où l'une ou plusieurs cétones cycliques étant liquides à une température entre 15 et 35 °C sont distribuées à travers au moins une partie de l'épaisseur du substrat en polycarbonate ;
d) rincer facultativement l'au moins première surface de la couche de substrat en polycarbonate traitée obtenue dans l'étape (c) avec alcool de diacétone diluant pour éliminer un excès de l'une ou plusieurs cétones cycliques étant liquides à une température entre 15 et 35 °C ;
e) sécher facultativement la couche de substrat en polycarbonate traitée obtenue dans l'étape (c) ou (d) pour réduire le pourcentage en poids des quantités combinées du fluide de traitement sur et dans le substrat en polycarbonate traité à entre 1 ppm et 0,4 % en poids, sur la base du poids du substrat en polycarbonate traité ;
f) fournir le substrat en polycarbonate traité obtenu dans l'une quelconque des étapes (c) à (e) où les quantités combinées du fluide de traitement sur et dans le substrat en polycarbonate traité est entre 1 ppm et 0,4 % en poids, sur la base du poids du substrat en polycarbonate traité ;
g) appliquer l'encre radiodurcissable sur au moins une partie des zones enflées de l'au moins première surface du substrat en polycarbonate traitée fournie dans l'étape (f) en utilisant l'impression à jet d'encre ;
h) durcir l'encre appliquée dans l'étape (g) de sorte que l'encre adhère à la surface de l'au moins première surface du substrat en polycarbonate ;
i) facultativement thermoformer le substrat en polycarbonate avec l'encre durcie dessus obtenue dans l'étape (h) ; et
j) appliquer facultativement une couche de revêtement sur au moins une partie d'au moins la première surface du substrat en polycarbonate avec l'encre durcie dessus obtenue dans l'étape (h) ou sur le substrat en polycarbonate thermoformé avec l'encre durcie dessus obtenue dans l'étape (i), suivie du séchage ou du durcissement de la couche de revêtement.

3. Procédé selon la revendication 1 ou 2, où l'une ou plusieurs cétones cycliques étant liquides à une température entre 15 et 35 °C sont sélectionnées à partir du groupe consistant en cétones cycliques non substituées, en cétones cycliques substituées avec au moins un groupe alkyle et leur mélanges, plus préférentiellement, du groupe consistant en cyclopentanone, 3,5,5-triméthyl-2-cyclohexene-1-one, 1-cyclohexylpropane-1-one, 1-cyclohexyléthanone, cyclohexanone et leurs mélanges, où la cétone cyclique de préférence est cyclohexanone.

4. Procédé selon l'une quelconque des revendications 1 à 3, où le substrat en polycarbonate de l'étape (a) a une épaisseur entre 0,1 et 0,5 mm, et où seulement ces parties de l'au moins première surface du substrat en polycarbonate de l'étape (a) qui sont imprimées dans l'étape (g) sont traitées avec le fluide de traitement de l'étape (b) dans l'étape (c), de préférence en utilisant impression à jet d'encre, en utilisant un système de distribution par flux sur feutre ou en utilisant un système de distribution par pulvérisation, dans une quantité entre 0,06 et 4 g/m², sur la base de la zone traitée.

5. Procédé selon l'une quelconque des revendications 1 à 4, où l'étape (e) est obligatoire, où de préférence les étapes (d) et (e) sont obligatoires, et où le séchage du substrat en polycarbonate traité dans l'étape (e) est effectué dans un four à circulation d'air chaud, de préférence à une température entre 35 et 120 °C, ou où le séchage du substrat en polycarbonate traité dans l'étape (e) est exécuté par évaporation sous conditions ambiantes.

6. Procédé selon l'une quelconque des revendications 1 à 5, où la quantité du fluide de traitement sur et/ou dans le substrat en polycarbonate traité obtenu dans l'étape (e) et fourni dans l'étape (f) est entre 1 ppm et 0,3 % en poids, plus préférentiellement entre 1 ppm et 0,2 % en poids, sur la base du poids du substrat en polycarbonate traité.

7. Procédé selon l'une quelconque des revendications 1 et 3 à 6, où le diluant est choisi du groupe consistant en n-hexane, n-heptane et n-octane, où le diluant de préférence est le n-heptane.

8. Procédé selon l'une quelconque des revendications 1 à 7, où l'encre radiodurcissable appliquée dans l'étape (g) est une encre durcissable aux UV et le durcissement dans l'étape (h) englobe l'application de rayonnement UV ou rayonnement EB à la couche d'encre.

9. Procédé selon l'une quelconque des revendications 1 à 8, où :
(a) l'encre radiodurcissable comprend des nanoparticules métalliques dispersées dans celles-ci pour fournir des pistes conductrices sur le substrat en polycarbonate traité ; ou
(b) l'encre radiodurcissable comprend des nanoparticules de précurseur de métal moleculairement dissoutes ou de précurseur de métal dispersées pour fournir des pistes conductrices sur le substrat en polycarbonate traité.

10. Procédé selon la revendication 9, où les nanoparticules métalliques sont frittées dans ou après l'étape (g) et avant l'étape (j), où le précurseur de métal est converti de préférence en métal correspondant après l'étape (g) suivie d'un frittage du métal, avant l'étape (j).

11. Procédé selon l'une quelconque des revendications 1 à 10, où l'étape (i) est effectuée, et où le thermoformage est effectué à une température entre 135 et 225 °C.

12. Procédé selon la revendication 11, où le thermoformage est un drapage, de préférence drapage effectué à une température entre 135 et 165 °C pendant une période entre 5 et 60 minutes, plus préférentiellement à une température entre 140 et 160 °C pendant une période entre 20 et 40 minutes.

13. Procédé selon l'une quelconque des revendications 1 à 12, où l'étape (j) est effectuée, et où la couche de revêtement est appliquée en utilisant le revêtement par écoulement, par immersion ou par pulvérisation, de préférence le revêtement par écoulement,
où le séchage ou le durcissement de la couche de revêtement est effectué de préférence à une température entre 120 et 140 °C pendant une période entre 30 et 60 minutes.

14. Procédé selon la revendication 13, où la couche de revêtement appliquée dans l'étape (j) est un système de revêtement dur, de préférence un système de revêtement dur répondant aux exigences suivantes :
• pas d'attaque chimique (par solution de nettoyage de vitres, alcool dénaturé non dilué, essence et kérosène de référence, conformément au Règlement 43 de la CEE-ONU, Révision 4, *Prescriptions uniformes relatives à l'homologation des vitrages de sécurité et de leur installation sur les véhicules,* 3 avril 2017, Annexe 3, paragraphe 11 ; 11.1-11.2.6.2.2);
• passer l'essai de comportement au choc de la tête (conformément au Règlement 43 de la CEE-ONU, Révision 4), *Prescriptions uniformes relatives à l'homologation des vitrages de sécurité et de leur installation sur les véhicules,* 3 avril 2017, Annexe 3, paragraphe 3 ; 3.2-3.2.6) ; et
• passer l'essai de chute de bille de 227 g à -18 °C (conformément au Règlement 43 de la CEE-ONU, Révision 4), *Prescriptions uniformes relatives à l'homologation des vitrages de sécurité et de leur installation sur les véhicules,* 3 avril 2017, Annexe 3, paragraphe 2 ; 2.1-2.2.4).

15. Substrat en polycarbonate imprimé par jet d'encre pouvant être obtenu par le procédé selon l'une quelconque des revendications 1 à 14, où le substrat en polycarbonate imprimé par jet d'encre est de préférence un produit choisi sous la forme de fenêtres ou de pare-brise décorés et/ou chauffables, électronique dans le moule, d'antennes imprimées, d'étiquettes RFID imprimées, interrupteurs capacitifs imprimés, guides de lumière capacitifs imprimés et de cartes d'identification à puce imprimées.
